# EUROPEAN PATENT APPLICATION

(11) **EP 1 380 969 A2**
(43) Date of publication of application: **14.01.2004**
(21) Application number: 03102009.2
(22) Date of filing: 04.07.2003
(51) Int. Cl.: G06F 17/30

(54) **System and method for problem solving support, and medium storing a program therefor**

(30) Priority: 08.07.2002 JP 2002198204; 30.04.2003 JP 2003126068
(71) Applicant: Cannac, Inc., Tokyo 101-0047 (JP)
(72) Inventor: Katayama, Yuji,, c/o CANNAC, Inc., Chiyoda-ku, Tokyo 101-0047 (JP); Narumi, Takeshi, c/o CANNAC, Inc., Chiyoda-ku, Tokyo 101-0047 (JP)
(74) Representative: Weihs, Bruno

(57) **Abstract**

A problem solving support system for supporting problem solving for electronic apparatus users based on user input on how to use the apparatus including an execution program which enables new functions of an electronic apparatus remotely operated by an execution processing section, and an update control section which obtains index word character strings specifying the new functions and element words related to the index word character strings from outside, matches the index word character strings with the element words, stores the obtained execution program in the execution program group storage files, and stores obtained element words in the dictionary database.

## Description

The present application claims priority from Japanese Patent Applications Nos. 2002-198204 filed on July 8, 2002 and 2003-126068 filed on April 30, 2003, the contents of which are incorporated herein by reference.

### BACKGROUND OF THE INVENTION

### Field of the Invention

The present invention relates to a system and method for problem solving support and medium storing a program therefor. More particularly, the invention relates to a system and method for displaying problem solving information about the use of electronic apparatuses with multiple functions, such as portable telephones, PHSs (or personal handy-phone systems), PDAs (or personal digital assistants), and other mobile information terminals of non-portable information apparatuses with a display and an input apparatus, such as car navigation systems, facsimiles and telephones, and of remote controllers for information home appliances, such as air-conditioners, washing machines, TVs, video/DVD players, and audio apparatuses, based on input words input by the user, and for executing the functions of the problem solving information.

### Related Art

As electronic apparatuses, such as portable telephones, are including more and more functions, users are demanding that they be able to easily and accurately search for the functions that they desire. To meet this demand, conventional technologies, such as problem solving database search systems, have been offered to information terminal users who have very little knowledge about these products so that they can readily reach the information they seek as disclosed, for an example, in an Unexamined Japanese Patent Application Publication (Laid-Open) No. 2001-249937. Also, problem solving database search systems allowing information terminal users to reach information simply by inputting any arbitrary word have been offered as disclosed, for an example, in Unexamined Japanese Patent Application Publication (Laid-Open) No. 2002-123541.

However, when new functions are added to an electronic apparatus or when new models of an electronic apparatus are offered, the conventional technologies described above cannot support problem solving for the new functions.

### SUMMARY OF THE INVENTION

Therefore, it is an object of the present invention to provide a problem solving support system and a problem solving support method and program which can solve the foregoing problem. The above and other objects can be achieved by combinations described in the independent claims. The dependent claims define further advantageous and exemplary combinations of the present invention.

According to the first aspect of the present invention, a problem solving support system for supporting problem solving for electronic apparatus users based on words input by the users on how to use the apparatuses, the system comprising: execution program group storage files that include an execution program which executes a specified function of the electronic apparatuses for solving the problems by matching index word character strings that specify the function; a dictionary database which includes element words corresponding to the index word character strings and indicating the concepts of the functions that the index word character strings show and character strings corresponding to the index word character strings and showing the readings of the index word character strings; an input word judgment section which checks whether an input word is either kana or Roman alphabetic and whether the number of characters of the input word is within a predetermined number; a forefront word matching processing section which searches said dictionary database based on the input word, extracts the index word character strings that match the input word with the first character of the character string showing the reading of the index word character string and displays the extracted index word character strings when the input word judgment section judges that the input word is either kana or Roman alphabetic and that the number of characters of the input word is within a predetermined number; a search processing section which searches for the input word using the element word stored in said dictionary database, extracts the index word character strings which correspond to the element word included in the input word based on the search, and displays the extracted index word character strings when the input word judgment section judges that the input word is neither kana nor Roman alphabetic and that the number of characters of the input word is over a predetermined number; and an execution processing section which executes the execution program which is stored in said execution program group storage files and which corresponds to the index word character strings to be executed when the user inputs an execution command for the index word character string displayed by said forefront word matching processing section or said search processing section.

The dictionary database may include: a merge dictionary which stores synonyms indicating concepts similar to the element word, which concepts corresponding to the element word; and an index word database including the element word corresponding to the index word character strings and character strings indicating the readings of the index word character strings by corresponding to the index word character strings, and said search processing section comprises: an element word extract section which searches for the input word using the element word and synonyms stored in said merge dictionary when said input word judgment section judges that the input word is neither kana nor Roman alphabetic and that the number of characters of the input word is over a predetermined number, said element word extract section extracts, based on a result of the search, the element word included in the input word and the element word corresponding to the synonyms included in the input word which is stored in said merge dictionary; and an index word extract section which extracts the index word character strings which correspond to the element word from said index word database and displays the extracted index word character strings.

Moreover, the input word judgment section accepts an input of the input word with a single input field. The input word judgment section may make the judgment according to the input indicating that the input word is to be determined. The input word is input into the input word judgment section with a single input field.

According to the second aspect of the present invention, a problem solving support system for supporting problem solving for electronic apparatus users based on words input by the users on how to use the apparatuses, the system comprising: execution program group storage files that include an execution program which executes the specified function of said electronic apparatuses for solving the problems by matching index word character strings that specify the function; a dictionary database including element words which describe concepts of the functions which the index word character strings show, corresponding to the index word character strings; a search processing section which searches for the input word using the element word stored in said dictionary database when the input word is input, and based on the search, extracts the index word character strings which correspond to the element word included in the input word from said dictionary database, and displays the extracted index word character string; and an execution processing section which executes the execution program which is stored in said execution program group storage files and which corresponds to the index word character string to be executed when the user inputs an execution command for the index word character string displayed by said search processing section, wherein said search processing section, said execution processing section, and said execution program group storage file are installed in a problem solving support terminal and said dictionary database is removable from the problem solving support terminal.
The dictionary database may include: a merge dictionary which stores synonyms indicating concepts similar to the element word, which concepts corresponding to the element word; and an index word database including the element word related to the index word character strings, and said search processing section comprises: an element word extract section which searches for the input word using the element word and the synonyms when the input word is input, based on the search, and extracts the element word included in the input word and element word corresponding to the synonyms included in the input word which is stored in said merge dictionary; and an index word extract section which extracts the index word character strings corresponding to the element word extracted by said element word extract section from said index word database and displays the extracted index word character strings.

According to the third aspect of the present invention, a problem solving support system for supporting problem solving for electronic apparatus users based on words input by the users on how to use the apparatuses, the system comprising: execution program group storage files that include an execution program which executes a specified function of said electronic apparatuses for solving the problems by matching index word character strings that specify the function; a dictionary database including element words which indicate concepts of the functions which the index word character strings, corresponding to the index word character strings; a search processing section which searches for the input word using the element word stored in said dictionary database when the input word is input, and extracts, based on the search, the index word character strings which correspond to the element word included in the input word from said dictionary database, and displays the extracted index word character string; and an execution processing section which executes the execution program which is stored in said execution program group storage files and which corresponds to the index word character strings to be executed when the user inputs an execution command for the index word character string displayed by said search processing section, wherein said search processing section, said execution processing section, and said execution program group storage file are installed in a problem solving support terminal and said dictionary database is installed in a server connected to the problem solving support terminal via a network.
The dictionary database may include: a merge dictionary which stores synonyms indicating concepts similar to the element word, which concepts corresponding to the element word; and an index word database including the element word related to the index word character strings, and said search processing section comprises: an element word extract section which searches for the input word using the element word and the synonyms when the input word is input, and extracts, based on the search, the element word included in the input word and element word corresponding to the synonyms included in the input word which is stored in said merge dictionary; and an index word extract section which extracts the index word character strings corresponding to the element word extracted by said element word extract section from said index word database and displays the extracted index word character strings.

In the second aspect and third aspect of the present invention, the dictionary database comprises the element words which are different according to the attributes of the user. Moreover, in the second aspect and third aspect of the present invention, the problem solving support system may further include a non-corresponding input processing section which collects the input words which have been judged not to include the element words by said search processing section in order of frequency of appearance and outputs the input words appearing more often than a predetermined frequency.

In the second aspect and third aspect of the present invention, the non-corresponding input processing section stores index word character strings which specify functions immediately selected by the users corresponding to the input words and registers input words corresponding to the index word character strings more often than a predetermined frequency as element words of the index word character strings in said dictionary database when the input words are judged not to include the element words.

According to the fourth aspect of the present invention, a problem solving support system for supporting problem solving for electronic apparatus users based on words input by the users on how to use the apparatuses, the system comprising: execution program group storage files that include an execution program which executes the specified function of said electronic apparatuses for solving the problems by matching index word character strings that specify the function; a dictionary database including element words which describe the concepts of the functions which the index word character strings show, the concepts corresponding to the index word character strings; a search processing section which searches for the input word using the element word stored in said dictionary database when the input word is input, and based on the search, extracts the index word character strings which corresponds to the element word included in the input word from said dictionary database, and displays the extracted index word character string; an execution processing section which remotely controls the electronic apparatuses through the execution of the execution program which is stored in said execution program group storage files and which corresponds to the index word character string to be executed when the user inputs an execution command; and an update control section which obtains an execution program for executing the new functions of a new electronic apparatus which is remotely operated by said execution processing section, the index word character strings specifying the new function, and the element word related to the index word character strings, corresponds to the obtained index word character strings, stores the obtained execution program in said execution program group storage file, and stores the obtained element words in said dictionary database.
The dictionary database may include: a merge dictionary which stores synonyms indicating concepts similar to the element word, which concepts corresponding to the element word; and an index word database including the element word related to said index word character strings, and said search processing section comprises: an element word extract section which searches for the input word using the element word and the synonyms when the input word is input, based on the search, and extracts the element word included in the input word and element word corresponding to the synonyms included in the input word which is stored in said merge dictionary; and an index word extract section which extracts the index word character strings corresponding to the element word extracted by said element word extract section from said index word database and displays the extracted index word character strings.

At least either the execution program for the new electronic apparatus or the element words correspond to the index word character strings corresponding to the new electronic apparatus, and is stored in a removable record medium.

According to the fifth aspect of the present invention, a problem solving support system for supporting problem solving for electronic apparatus users based on words input by the users on how to use the apparatuses, the system comprising: execution program group storage files that include an execution program which executes the specified function of said electronic apparatuses for solving the problems by matching index word character strings that specify the function; a dictionary database including element words which includes element words indicating the concept of the functions which the index word character strings show and the importance of the functions specified by the index word character strings; a search processing section which searches for the input word using the element word stored in said dictionary database, extracts the index word character strings which correspond to said element word included in the input word based on the search, and displays extracted the index word character strings with an order of high importance when the input word is input; and an execution processing section which executes the execution program which is stored in the execution program group storage files and which corresponds to said index word character string to be executed when the user inputs an execution command for the index word character strings displayed by said search processing section.
The dictionary database may include: a merge dictionary which stores synonyms indicating concepts similar to the element word corresponding to the element word; and an index word database including said element word related to said index word character strings, and said search processing section comprises: an element word extract section which searches for the input word using the element word and synonyms when the input word is input, based on the search, and extracts the element word included in the input word and element word corresponding to the synonyms included in the input word which is stored in said merge dictionary; and said index word extract section extracts the index word character strings corresponding to the element word, said element word extract section extracts and displays the extracted index word character strings with an order of high importance.

According to the sixth aspect of the present invention, a problem solving support method for supporting problem solving for electronic apparatus users based on words input by the users on how to use the apparatuses, the method comprising steps of: an execution program group control step for controlling an execution program for executing the problem-solving functions which executes the specified function by matching index word character strings that specify the functions of the electronic apparatuses; a dictionary control step for controlling element words indicating the concepts of the functions which the index word character strings show and character strings showing the readings of said index word character strings; an input word judgment step for accepting the input of the input word by user and checking whether an input word is either kana or Roman alphabetic and whether the number of characters of the input word is within a predetermined number; a forefront word matching processing step for referring to said dictionary control step based on the input word to extract the index word character strings that match the input word with the first character of the character string showing the reading of the index word character string when it is judged that the input word is either kana or Roman alphabetic and that the number of characters of the input word is within a predetermined number and for displaying the extracted index word character strings; a search processing step for searching for the input word using the element word stored in the dictionary database controlled by said dictionary control step, extracts the index word character strings which correspond to the element word included in the input word based on the search, and displays the extracted index word character strings when the input word judgment step judges that the input word is neither kana nor Roman alphabetic and that the number of characters of the input word is over a predetermined number; and an execution processing step for executing the execution program which corresponds to the index word character strings to be executed and is controlled under said execution program group control step when the user inputs an execution command for the index word character strings displayed by said forefront word matching processing step or said search processing step.

According to the seventh aspect of the present invention, a problem solving support method for supporting problem solving for electronic apparatus users based on words input by the users on how to use the apparatuses, the method comprising steps of: an execution program group control step for controlling an execution program for executing the problem-solving functions which executes the specified function by matching index word character strings that specify the functions of the electronic apparatuses; a dictionary control step for controlling element words corresponding to the index word character strings and indicating the concepts of the functions which the index word character strings show; a search processing step for searching for the input word using the element word stored in the dictionary database controlled by said dictionary control step, extracting the index word character strings which correspond to the element word included in the input word based on the search, and displaying the extracted index word character strings when the input word is input; an execution processing step for remotely controlling the electronic apparatuses by executing the execution program corresponding to the index word character string to be executed in the execution program group control step when the user inputs an execution command for the index word character strings displayed in said search processing step; and an update control step for obtaining an execution program for executing the new functions of a new electronic apparatus which is remotely operated during said execution processing step, the index word character strings specifying the new function, and the element words related to the index word character strings, by matching the obtained index word character strings, controlling the obtained execution program in said execution program group control step, and controls the obtained element words in said dictionary control step.

According to the eighth aspect of the present invention, a problem solving support program for a problem solving support system for supporting problem solving for electronic apparatus users based on words input by the users on how to use the apparatuses, the program causes the problem solving support system to realize: an execution program group control function that controls an execution program for executing the problem-solving functions by matching index word character strings that specify the functions of the electronic apparatuses; a dictionary control function which controls element words indicating the concepts of the functions which the index word character strings show and character strings showing the readings of the index word character strings; an input word judgment function which accepts the input of the input word by user and checks whether an input word is either kana or Roman alphabetic and whether the number of characters of the input word is within a predetermined number; a forefront word matching processing function which checks the dictionary control function based on the input word, extracts the index word character strings that match the input word with the first character of the character string showing the reading of the index word character string when the input word is judged to be either kana or Roman alphabetic and that the number of characters of the input word is within a predetermined number and displays the extracted index word character strings; a search processing function which searches for the input word using the element word controlled by the dictionary control function, extracts the index word character strings which correspond to the element word included in the input word based on the search, and displays the extracted index word character strings when the input word judgment function judges that the input word is neither kana nor Roman alphabetic and that the number of characters of the input word is over a predetermined number; and an execution processing function which executes said execution program which corresponds to the index word character strings to be executed and is controlled by the execution program group control function when the user inputs an execution command for the index word character strings displayed by the forefront word matching processing function or said search processing function.

According to the ninth aspect of the present invention, a medium storing a problem solving support program for a problem solving support system for supporting problem solving for electronic users based on words input by the users about how to use the apparatus causes the problem solving support system to realize: an execution program group control function that controls an execution program for solving the problems by matching index word character strings that specify the functions of the electronic apparatuses; a dictionary control function which controls element words which includes element words indicating the concepts of the functions which the index word character strings show; a search processing function which searches for the input word using the element word controlled by the dictionary control function, extracts the index word character strings included in the input word, and displays the extracted index word character strings when the input word is input; an execution processing function which remotely controls the electronic apparatus by executing the execution program which corresponds to the index word character strings to be executed and is controlled by the execution program group control function when the user inputs an execution command for the index word character strings displayed by the forefront matching processing function or the search processing function; and an update control section which obtains an execution program for executing the new functions of a new electronic apparatus which is remotely operated by the execution processing section, the index word character strings specifying the new functions, and the element word related to the index word character strings, corresponds to the obtained index word character strings, makes the execution program group control function to control the obtained execution program, and makes the dictionary control function to control the element words.

The summary of the present invention does not necessarily describe all necessary features of the present invention. The present invention may also be a subcombination of the features described above.

### Brief Description of the Drawings

Figure 1 shows an example of a problem solving support system.
Figure 2 shows the first example of a block diagram of a function configuration of a problem solving support system.
Figure 3 is the second example of a block diagram of a function configuration of the problem solving support system.
Figure 4 is the third example of a block Figure of a function configuration of the problem solving support system.
Figure 5 shows the other example of a block Figure of a function configuration of the problem solving support system.
Figure 6 depicts an example of a data format of an index word database.
Figure 7 shows an example of a data format of a merge dictionary.
Figure 8 is an example of a data format of a collocation dictionary.
Figure 9 is an example of a data format of the collocation dictionary.
Figure 10 is an example of how the problem solving support system works in Figures 2 to 4.
Figure 11 shows an example of the detailed flow of Step 200 in Figure 10.
Figure 12 is an example of the detailed flow of Step 200 in Figure 10.
Figure 13 shows an example of how an update control section works in Figure 4.
Figure 14 is an explanatory block Figure of a detailed configuration of a dictionary database search section in Figure 14.
Figure 15 shows an example of screen shifting of the system.
Figure 16 is an example of screen shifting of the system.
Figure 17 is an example of screen shifting of the system.
Figure 18 is an example of screen shifting of the system.
Figure 19 is an example of screen shifting of the system.

### DETAILED DESCRIPTION OF THE INVENTION

The present invention will now be described based on the preferred embodiments, which do not intend to limit the scope of the present invention, but exemplify the present invention. All of the features and the combinations thereof described in the embodiment are not necessarily essential to the present invention.

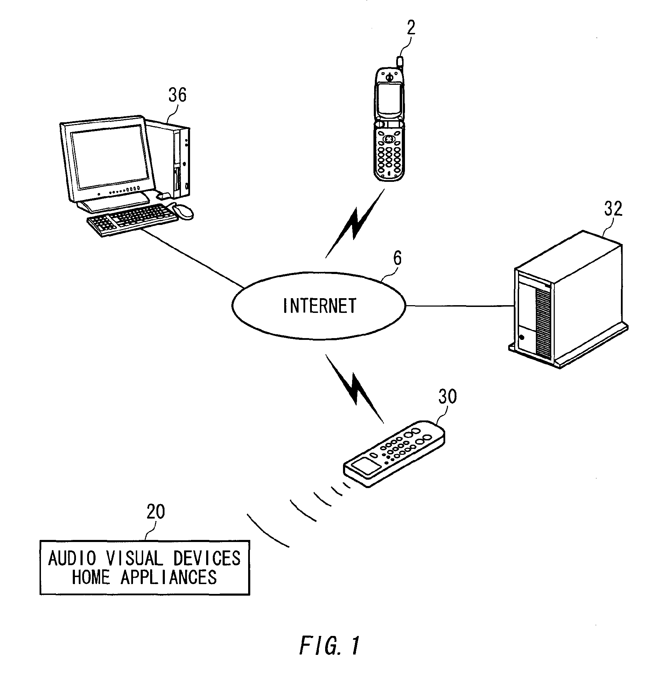

Figure 1 shows a configuration of a problem solving support system in the present invention. The problem solving support system may be electronic apparatuses with multiple functions. Such electronic apparatuses include portable information terminals 2, such as portable telephones, PHSs, PDAs, non-portable information apparatuses with a display and an input apparatus, such as personal computers 36, car navigation systems, facsimiles 18, and telephones 16, and remote controllers 30 for information home appliances, such as air-conditioners, washing machines, TVs, video/DVD players, and audio apparatuses.

The problem solving support system may also be a server 32 which supports the operation of portable telephones 2, remote controllers 30, and personal computers 36 via the Internet 6. In this case, the server 32 supports problem solving for the user through reception of input words input into the portable telephones 2, the remote controllers 30, and the personal computers 36 by the user and the sending of search results on problem solving based on received input words.

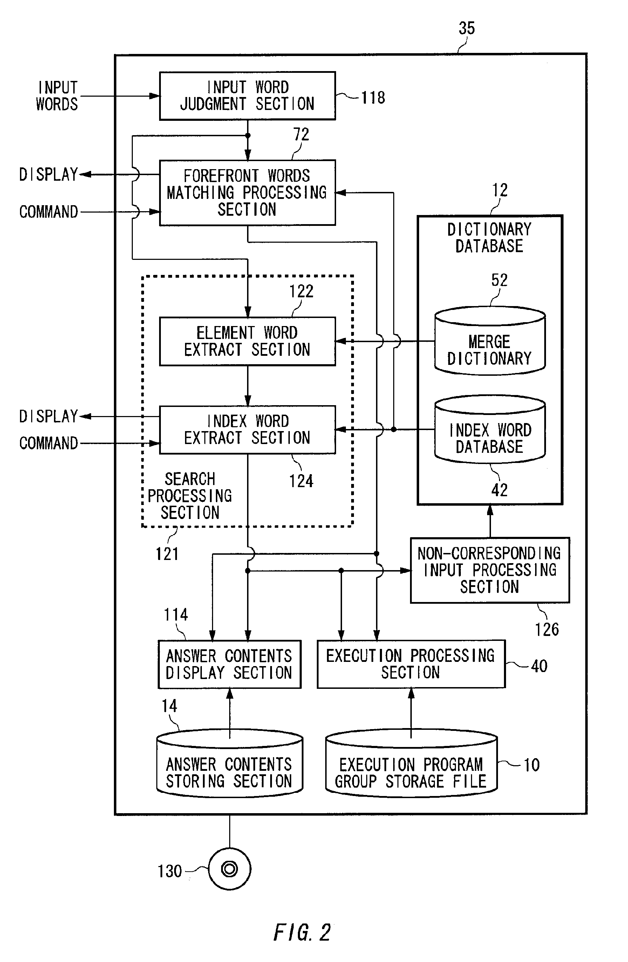

Figure 2 shows a first example of a function configuration of the problem solving support system 35 of the present invention. The problem solving support system 35 includes: execution program group storage files 10 that include an execution program for solving problems by matching index word character strings that specify the functions of electronic apparatuses; a dictionary database 12 including element words which describe concepts of functions which index word character strings show and character strings indicating the readings of index word character strings; an input word judgment section 118 which checks whether an input word is either kana or Roman alphabetic and whether the number of characters of the input word is within a predetermined number; a forefront word matching processing section 72 which extracts index word character strings that match the input word with the first character of the character strings showing the readings of the index word character strings from the dictionary database 12 when an input word is judged to be either kana or Roman alphabetic and the number of characters of the input word to be within a predetermined number.

The problem solving support system 35 also includes a search processing section 121 which searches for input words using element words stored in the dictionary database 12, extracts from the dictionary database 12 index word character strings which correspond to element words included in input words based on the search, and displays extracted the index word character strings when the input word is judged to be neither kana nor Roman alphabetic and the number of characters of the input word to be over a predetermined number; and an execution processing section 40 which refers to the execution program group storage files 10 and executes the execution program which corresponds to index word character strings to be executed and is controlled by the execution program group control function when a user inputs an execution command for index word character strings displayed by the forefront matching processing section 72 or the search processing section 121.

The dictionary database 12 includes a merge dictionary 52 which stores synonyms indicating concepts similar to element words and an index word database 42 including element words related to index word character strings and character strings indicating the readings of index word character strings. The search processing section 121 includes an element word extract section 122 which searches for input words using element words and synonyms stored in the merge dictionary when the input word judgment section judges that the input word is neither kana nor Roman alphabetic and that the number of characters of the input word is over a predetermined number and an index word extract section 124 and extracts index word character strings which correspond to element words from the index word database and displays extracted index word character strings.

The problem solving support system 35 also includes an answer contents storage section 14 which stores answer contents explaining problem solving functions which correspond to index word character strings and an answer contents display section 114 which refers to the answer contents storage section 14 when a user inputs a display command for index word character strings displayed by the index word display section 42 and displays answer contents corresponding to the index word character strings.

With the above configuration, the number of words for the search in the index word display section 42 by the forefront matching processing section 72 is fewer than that of words for the search in the merge dictionary 52 by the element word extract section 122. Therefore, the time required for a search by the forefront matching processing section 72 is shorter than that by the element word extract section 122. Thus, if a user who is used to handling electronic apparatuses (a user who knows the index word character strings of a function necessary for problem solving) inputs the readings of one or more characters of target index word character strings from the front the desired index word character strings can be promptly displayed. In this case, the input word judgment section 118 judges either the forefront matching processing section 72 or the element word extract section 122 executes the search depending on the type and number of characters of an input word. Therefore, the problem solving support system 35 allows both a beginner or an experienced user of an electronic apparatus to execute a search by accepting input words with the same input field. Given this, the problem solving support system 35 is convenient for a wide range of users.

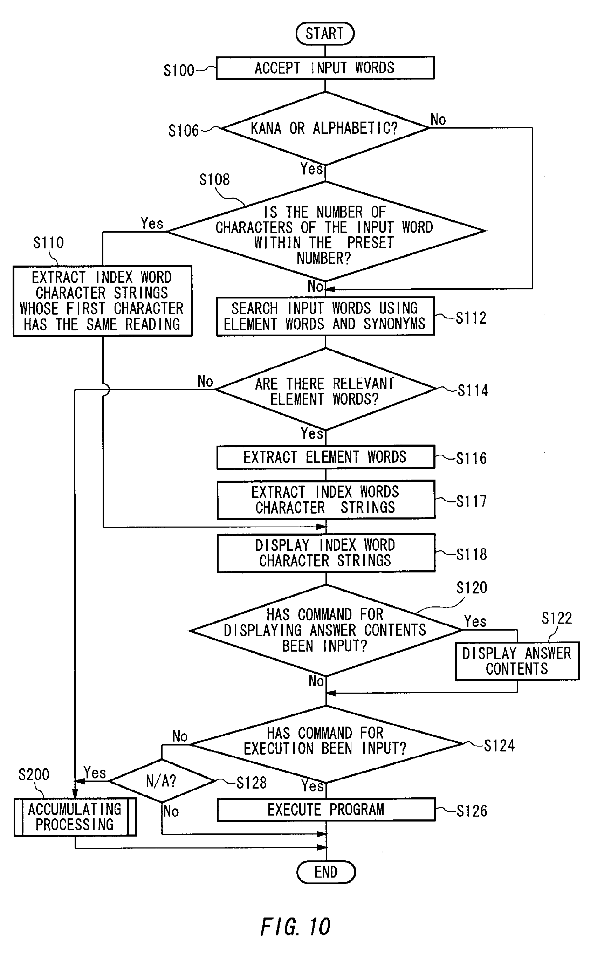

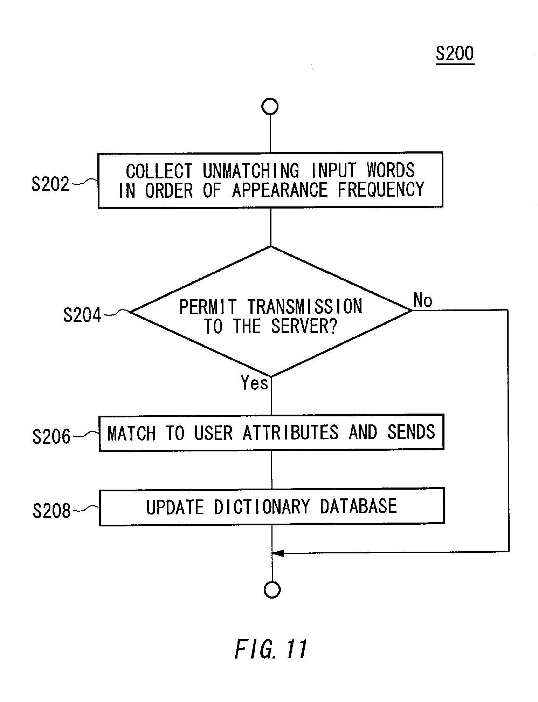

The problem solving support system 35 also includes a non-corresponding input processing section 126 which collects input words which have been judged not to include element words and synonyms by the element word extract section 122 with an order of appearance frequency and outputs input words which appear more than a predetermined frequency. The non-corresponding input processing section 126 should preferably output input words corresponding to the user attributes which appear more than a predetermined frequency. The output data of the non-corresponding input processing section 126 is sent to a server managed by the service provider of the problem solving support system 35 and is reflected on the update of the dictionary database. Details of the database update in a server are explained later using Figures 10 and 11. The non-corresponding input processing section 126 may detect desired functions input by the user using input words and update the dictionary database based on the detection results 12 when there is an input word which has been judged not to include element words and synonyms. Refer to Figures 10 and 11 for the details.

The merge dictionary 52 or the index word database 42, or both, may store element words and synonyms which differ according to user attributes. User attributes are, for example, age group and occupation. These attributes are used to realize highly accurate searches when an input word has a tendency related to an attribute. Settings based on user attributes for the merge dictionary 52 and the index word database 42 are done by a retailer of the problem solving support system 35 when the system is sold. Users also may establish settings themselves if the so desire.

The record medium 130 stores programs which enable the problem solving support system 35 to execute the functions of an input word judgment section 118, a forefront word matching processing section 72, an element word extract section 122, an index word extract section 124, a dictionary database 12, an answer contents display section 114, an answer contents storage section 14, an execution processing section 40, execution program group storage files 10, and a non-corresponding input processing section 126. The record medium 130 may obtain such programs via a network.

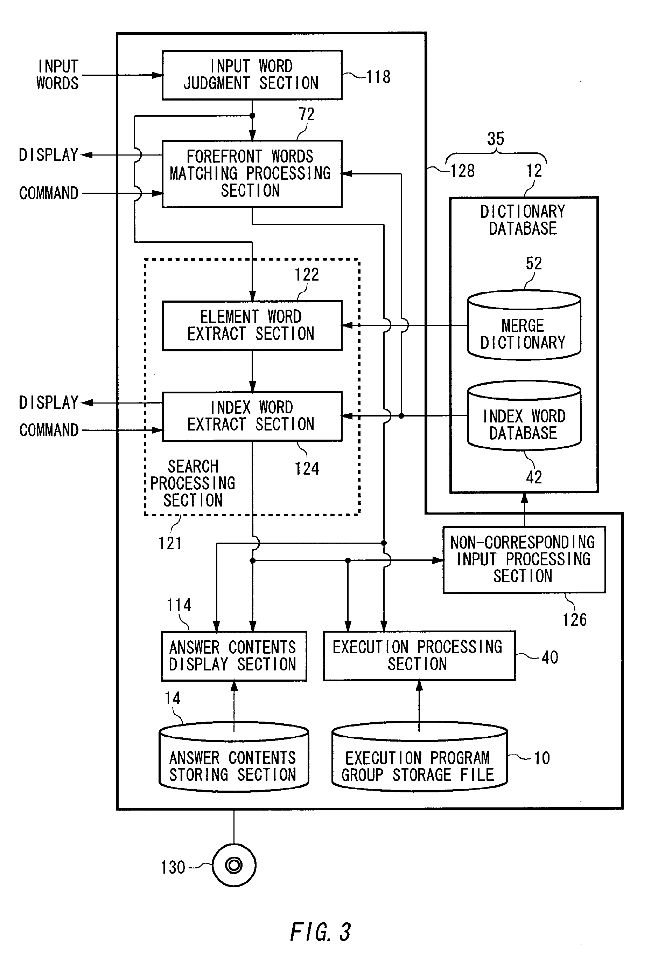

Figure 3 shows a second example of the function configuration of the problem solving support system 35. In the present embodiment, the input word judgment section 118, the forefront word matching processing section 72, the element word extract section 122, the index word extract section 124, the answer contents display section 114, the answer contents storage section 14, the non-corresponding input processing section 126, the execution processing section 40, and the execution program group storage files 10 are installed in a problem solving support terminal 128. The removable dictionary database 12 with the merge dictionary 52 and the index word database 42 is installed in the problem solving support terminal 128 as a record medium.

The dictionary database 12 with the merge dictionary 52 and the index word database 42 may also be installed in a server connected to the problem solving support terminal 128 via a network. In this case, since the dictionary database 12 is independent of the problem solving support terminal 128, data updating is easy. The answer contents storage section 14 and the execution program group storage files 10 may be included in the removable record medium or a server. Therefore, whenever data necessary for a search and a program necessary for a problem solving are required, the problem solving support terminal 128 can obtain them from the removable record medium or the server. Thus, a large memory capacity is not required for the problem solving support terminal 128 and constant updating of data and the programs to be used is easy.

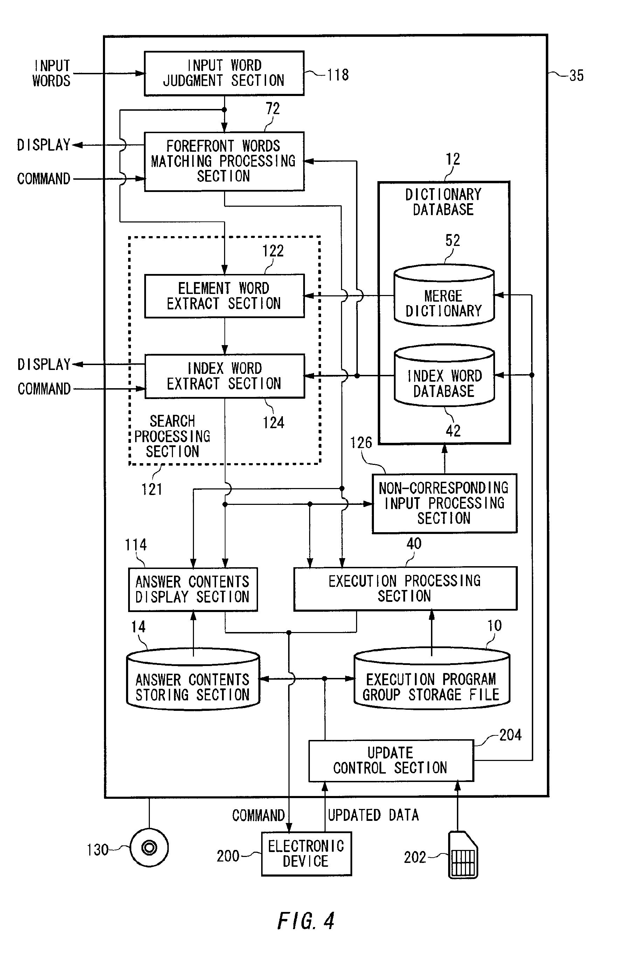

Figure 4 shows a second example of the function configuration of the problem solving support system 35. The problem solving support system 35 in the present embodiment is a remote controller for an external operation apparatus 200. In the present embodiment, the execution processing section 40 remotely controls the electronic apparatus 200 used by the user. In the present embodiment, in addition to the function configuration explained in Figure 2, the problem solving support system 35 includes an execution program for enabling the new functions of a new electronic apparatus 200 which the execution processing section 40 remotely controls and an update control section 204, which obtains answer contents related to the new functions or index word character strings and element words related to index word character strings, stores obtained execution programs corresponding to obtained index word character strings in the execution program group storage files 10, and stores obtained answer contents in the answer contents storage section 14, and stores obtained element words in the an index word database 42. At least one of the execution program, answer contents, and element words corresponding to the new electronic apparatus 200 corresponding to index word character strings which correspond to the new electronic apparatus 200 is stored in a removable record medium 202 of the problem solving support system 35. When the update control section 204 judges that the record medium 202 is installed in the problem solving support system 35, it searches and obtains at least one of the index word character strings specifying the new functions, answer contents related to the new functions or index word character strings, and element words related to index word character strings. The update control section 204 may obtain an execution program for enabling the new functions of a new electronic apparatus 200, index word character strings specifying the new functions, answer contents related to the new functions or index word character strings, and element words related to index word character strings using radio communication means such as Bluetooth. Thus, even when a new function is added to the electronic apparatus 200, the problem solving support system 35 can handle the new function because the update control section 204 obtains programs and data corresponding to the new function. The record medium 130 stores a program which enables the problem solving support system 35 to execute the functions of the update control section 204. The record medium 130 may obtain the program via a network.

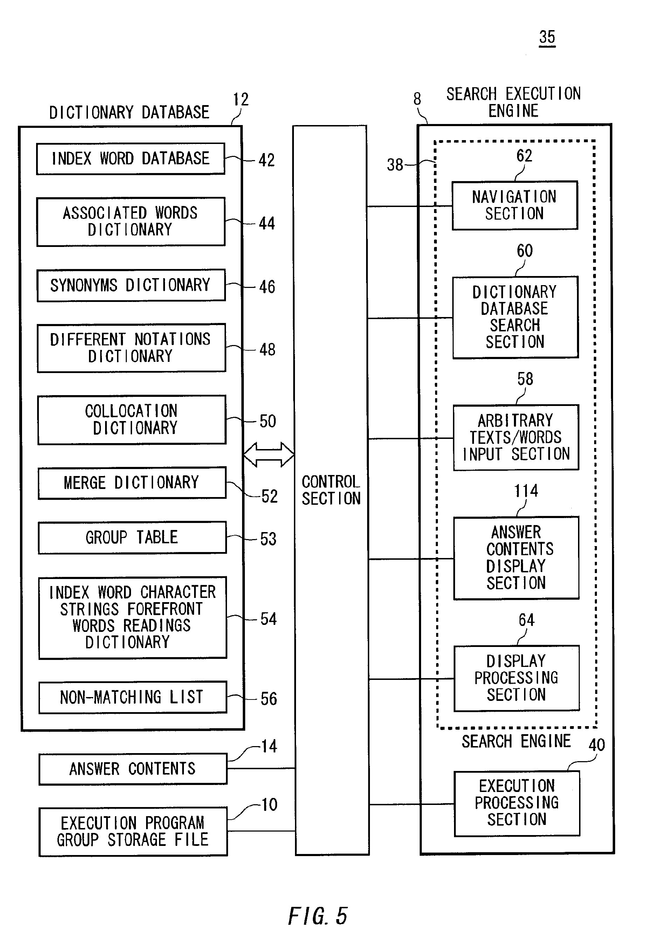

Figure 5 shows another example of the function configuration of the problem solving support system 35. The problem solving support system 35 in the present embodiment includes a search/execution engine 8 instead of an input word judgment section 118, a forefront word matching processing section 72, an element word extract section 122, an index word extract section 124, an answer contents display section 114, an execution processing section 40, and a non-corresponding input processing section 126 explained in Figures 2 and 4. The search/execution engine 8 includes a navigation section 62, a dictionary database search section 60, an arbitrary word input section 58, an answer contents display section 114, a display processing section 64, and an execution processing section 40. A search engine 38 controls the operations of the navigation section 62, the dictionary database search section 60, the arbitrary word input section 58, the answer contents display section 114, and the display processing section 64.

The dictionary database search section 60 searches index word character strings which match or are similar to input words in the dictionary database 12 based on input words input from the arbitrary word input section 58 which accepts the input of arbitrary words by a user. The dictionary database search section 60 is another example of the input word judgment section, the forefront word matching processing section, element word extract section, and index word extract section in the present invention. The navigation section 62 controls the dictionary database search section 60 and directly or hierarchically displays index word character strings searched by the dictionary database search section, navigation texts which link with the index word character strings, or answer contents 14 such as explanation texts on the screens of an electronic apparatus with a built-in microprocessor, such as a portable telephone 2, information electronic apparatus, or remote controller 30. The navigation section 62 then finds problem solving information based on index word character strings selected by the user and the display processing section 64 displays problem solving information on the screen of the electronic apparatus.

The execution processing section 40 selects from the execution program group storage files 10 an execution program corresponding to a function of problem solving information based on the user's execution command, and executes or sets a function corresponding to the problem solving information. The dictionary database 12 in the present embodiment includes an associated words dictionary 44, a synonyms dictionary 46, a different notations dictionary 48, and a collocation dictionary 50, an index word character strings forefront words reading dictionary 54, and a non-matching list 56 in addition to the index word database 42 and the merge dictionary 52 explained in Figure 2. The index word character strings forefront words reading dictionary 54 may be incorporated in the index word database 42. The dictionaries for the system in this embodiment are Japanese. However, dictionaries of other languages are possible. In the dictionary database 12, the index word character strings stores explanation texts for functions indicated by the index word character strings, i.e., answer contents, in association with the index word character strings. The dictionary database 12 includes a range of dictionaries, such as an associated words dictionary (vocabulary information) 44, a different notations dictionary (word form information) 48, and a synonyms dictionary (meanings information) 46. Fuzzy searches are possible by referring to the dictionary database.

The navigation section 62 has a narrowing down process to help the user narrow down the appropriate problem solving information. The navigation hierarchy should be as shallow as possible to simplify the operation. Execution programs stored in the execution program group file 10 are for executing functions given in problem solving information that is displayed in the final stage of the navigation. When the user selects problem solving information and inputs an execution command the execution processing section 40 calls the execution program group file 10 and executes an execution program.

When the character strings do not completely match the index words in the dictionary database, the search engine 38 extracts parts of the character strings and compares them with parts of the index words in the dictionary database 12. The goal of character strings parts extraction is to guess based on judgments as to whether parts match. For example, when the user inputs the words "check frequently used memory dials" and when the user's portable telephone, the target of the information in the dictionary database 12, does not include the function "check frequently used memory dials", the search engine 38 extracts "check" and "memory dial" determines that "check" is a synonym of "retrieve" and "memory dial" is a synonym of "address book". In this case the dictionary database 12 includes conditions in which "check" equals "retrieve" and "memory dial" equals "address book". The words "frequently" in the input character strings are ignored because the words are too common. Based on the result, the intention of the user is judged to be related to and "retrieve" "address book" and the display section 64 displays the index word character strings and answer contents related to "address book: retrieve" on the portable telephone screen.

The dictionary database 12 in the present embodiment includes an index word database 42, a collocation dictionary 50, a merge dictionary 52, a group table 53, an associated words dictionary 44, a synonyms dictionary 46, a different notations dictionary 48, an index word character strings forefront words reading dictionary 54, and a non-matching list 56. The index word database 42 stores index word IDs, which correspond to and specify index word character strings, and element words. The associated words dictionary 44 includes associated words which are associated with and correspond to index word character strings. For example, the dictionary associates the index word character strings "alarm setting" with the associated words "not to sleep in" and "get up early". The associated words dictionary 44 may be incorporated in the index word database 42 by handling associated words as element words.

The synonyms dictionary 46 stores synonyms of element words (words whose meanings do not change even if they are replaced with element words) corresponding to element words. For example, the element word "bookmark" has the same meaning as the synonyms "favorite" and the element word "alarm" has the same meaning as the synonyms "buzzer", "bell", "caution", and "warning". Even if the user inputs "see my favorite page" the search engine recognizes it as "see my bookmarked page".

The different notations dictionary 48 stores different notations for each element word and synonym. Different notations indicate words with the same meaning but a different way of being written. For example, different notations "centre" for an element word "center" is stored in the different notations dictionary 48. Even if the user inputs "connect the centre" the search engine 38 refers to the different notations dictionary 48 and can recognize it as "connect the center".

In the collocation dictionary 50, all the element words and synonyms that are registered with the merge dictionary 52 are stored with each number of characters. The merge dictionary 52 stores readings/collocations, synonyms, and the readings of synonyms/collocations for all the element words as synonyms in the present invention.

The group table 53 groups index word character strings with functions or concepts common to index word character strings and stores them as function groups. Function group names, which indicate functions and concepts common to index word character strings, are assigned to each function group. The search engine 8 extracts function group names from the group table 53 and displays them when there is more than one type of candidate of index word character string extracted based on input words. By doing this, a hierarchy is given to the search results in order to avoid displaying numerous search results even when element words extracted based on input words correspond to a number of index word character strings. Therefore, operations become easier to understand. The search engine 8 executes a standard search for index word character strings which are included in selected function groups when a function group name which has been extracted from the group table 53 and displayed is selected.

The index word character string forefront words reading dictionary 54 stores character strings indicating the readings of index word character strings which correspond to the index word IDs of index word character strings. The dictionary database search section 60 can extract all the index word character strings that start with the input character when only one character is input. For example, when the user inputs the input character string "a", the index word character string forefront word reading dictionary 54 is referred to extract all the index word IDs of index word character strings with the forefront character "a", extracts index word character strings which are specified by the index word ID from the index word database 42, and displays them as a search result. In case of some languages such as Japanese or Chinese, the readings of index word character strings are represented in "kana" or "Pin-in" characters.

Words (ex. "you" and "them") that do not have features to narrow down index word character strings or words with unclear search goals are registered with the non-matching list 56. If only such words are input as input character strings the search engine 38 displays the message "No relevant information." on the screen.

Below are some examples of fuzzy searches employed by the dictionary database 12 with the above configuration. When a user inputs "noisy" or "loud" on a screen, the dictionary database search section 60 refers to the associated words dictionary 44 and displays index word character strings "equalizer function setting", "Ringing tone turn off", "key tone setting", "mail arrival tone turn off", "alarm tone volume setting", "mute sound", "Alarm sound volume setting", "Play sound volume", "Ringing volume setting", "key tone select", and "talking volume setting". When the user inputs "change volume", "set volume" or "sound louder", a search is conducted for the index words "volume setting" in the synonyms dictionary 46, which is displayed on the screen.

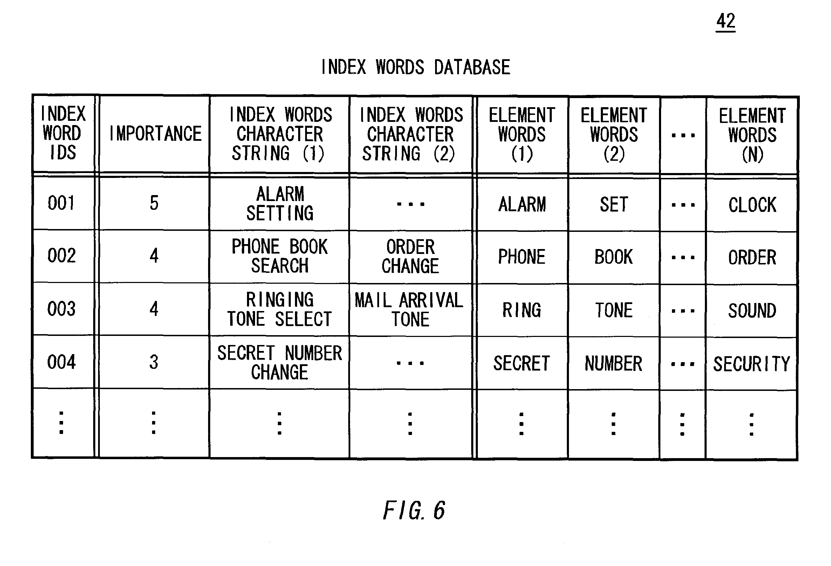

Figure 6 shows an example of a data format of the index word database 42. The index word database 42 stores index word IDs specifying index word character strings, the importance of functions which are specified by index word character strings, and element words for each index word character string. These index word character strings include "alarm setting", "phone book search", "ringing tone select", and "secret number change", and the user selects an index word character string indicating the problem solving function to execute. Element words for the index word character string "alarm setting" include "alarm", "setting", "sound", "timer", "wake up", "oversleep", "early bird", "time", and "clock".

The index word character strings are described by hierarchy. For example, the index word character string 1 can be described as a name in the upper hierarchy and the name for the lower hierarchy can be described as the index word character string 2. The importance of the functions specified by an index word character string is expressed with levels (ex. 5 levels), and the higher the number, the greater the importance. The index word database 42 stores character strings indicating the readings of index word character strings which correspond to index word character strings.

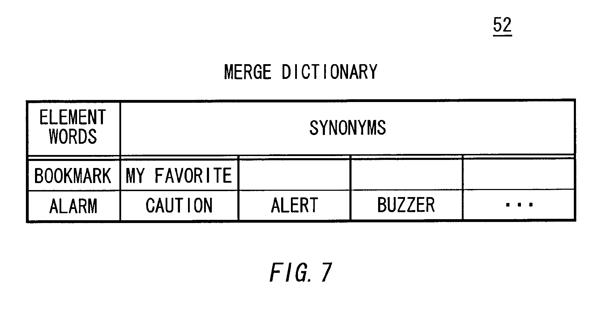

Figure 7 shows an example of a data format of the merge dictionary. The merge dictionary 52 stores synonyms of element words. Synonyms include readings/different notations, synonyms, readings of synonyms/different notations. The dictionary database search section 60 extracts synonyms whose number of characters is the same or fewer than that of input words from the collocation dictionary 50 and searches input words using the extracted synonyms. The dictionary database search section 60 then extracts element words corresponding to hit synonyms which are stored in the merge dictionary 52. For example, "see my favorite page" is recognized as "see bookmarked page" by converting "my favorite" to "bookmark" in the merge dictionary 52. The readings/different notations of element words, synonyms, readings/different notations of synonyms are treated the same. Element words and synonyms stored in the database are called registered words.

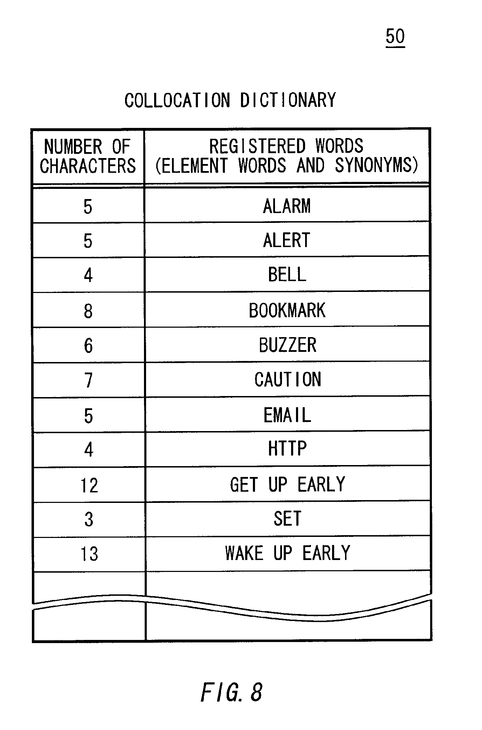

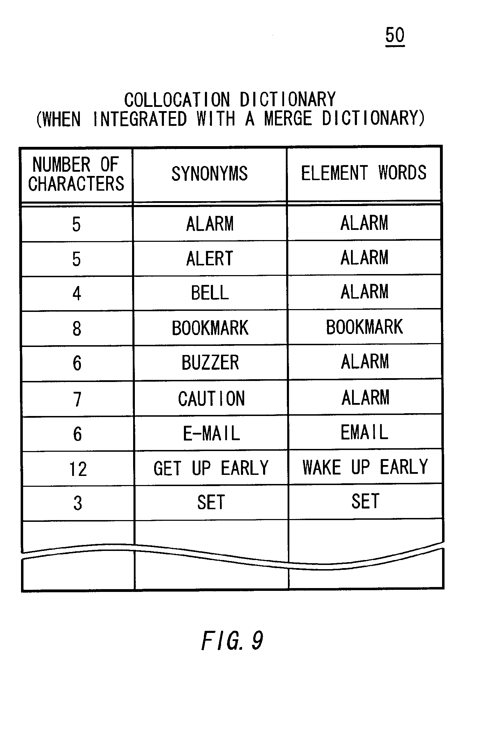

Figures 8 and 9 show an example of a data format of the collocation dictionary 50. The collocation dictionary 50 stores all element words and synonyms which are registered with the merge dictionary 52 with the number of characters. The collocation dictionary 50 is for cutting the input character strings into words that are registered with the merge dictionary 52. For example, synonyms for searching input words are narrowed down by the number of characters. In other words, synonyms are narrowed down to those whose number of characters is the same or fewer than that of input words. This enhances search efficiency. For example, when input words "set buzzer to get up early" are input, the collocation dictionary 50 is referred to in order to extract registered words "buzzer", "set", and "get up early" and element words corresponding to the registered words are extracted in the merge dictionary 52. As shown in Figure 9, the collocation dictionary 50 can be integrated with the merge dictionary 52 by storing more element words corresponding to synonyms.

Figure 10 shows a flowchart indicating how the problem solving support system 35 explained in Figures 2 and 4 works. The input word judgment section 118 accepts input words input by a user (S100). Then the input word judgment section 118 checks whether the input words are either kana or Roman alphabetic (S106) when an input word is determined by pressing the search button. In Step 106, when an input word is judged to be either kana or Roman alphabetic (S106: Yes) the input word judgment section 118 checks whether the number of characters of the input word is within a predetermined number (S108). In Step 106 when an input word is judged to be neither kana nor Roman alphabet (S106: No) the process goes to Step 112. The user can arbitrarily set the number of characters within the maximum number of characters of character strings indicating index word character strings.

In Step 108, when the number of characters of input words is judged to be within a predetermined number of characters (S108: Yes), the forefront word matching processing section 72 searches the index word database 42 based on the input word and extracts index word character strings whose first character of the character strings indicating the readings of index word character strings match an input word (S110). Then Step 118 starts.

In Step 108, when the number of characters of input words is judged not to be within a predetermined number of characters (S108: No), the element word extract section 122 searches for index words using element words and synonyms stored in the merge dictionary 52 (S112). As a result of Step 112, when there are relevant element words (S114: Yes), the element word extract section 122 extracts element words included in the input word and element words corresponding to synonyms included in the input word which are stored in the merge dictionary 52. On the other hand, when there is no relevant element word (S114: No) as a result of Step 112, Step S200 starts.

Then the index word extract section 124 refers to the index word display section 42 based on the element words extracted during Step 116 to extract index word character strings corresponding to element words from the index word display section 42 (S117) and displays extracted index word character strings (S118). At this point, the index word extract section 124 preferably gives priority to display index word character strings with high importance in the index word display section 42. Examples of giving priority to display index word character strings can be shown on the top of the screen or emphasized with bolding or color.

The answer contents display section 114 judges whether a user has input a command to display answer contents (explanations of index word character strings displayed during Step 110 of Step 118) (S120). In Step 120, when a command to display answer contents is judged not to have been input (S120: No), Step 120 starts. In Step 120, when a command to display answer contents is judged to have been input (S120: Yes), the answer contents display section 114 displays answer contents related to selected index word character strings from the answer contents storage section 14 (S122) and Step 124 starts.

In Step 124, the execution processing section 40 judges whether a user has input a command to execute the functions which the index word character strings displayed during Step 110 or Step 118 indicates (S124). In Step 124, when a command to execute the functions which the index word character strings indicate is judged to have been input by the user (S124: Yes), the execution processing section 40 executes an execution program corresponding to the index word character strings to be executed from among the execution programs stored in the execution program group storage files 10 (S126).

In Step 124, when a command to execute the functions which index word character strings indicate are judged not to have been input by the user (S124: No), the index word extract section 124 checks whether the index word character strings that the user intended to obtain have not been displayed (S128: Yes) or the user has canceled the selection of the index word character strings even though the index word character strings that the user intended to obtain have been displayed (S128: No). The judgment during Step 128 can be shown through displaying on the screen the "No relevant index word character strings" button which indicates that the index word character strings that the user intended to obtain are not displayed or the "Cancel" button for canceling the selection of index word character strings for the user to select.

In Step 125, when the user cancels the selection of index word character strings (S128: No), the flow ends. On the other hand, when the index word character strings that the user intended to obtain are not displayed during Step 128 (S128: Yes), the problem solving support system 35 collects input words with which the index word character strings that the user intended to obtain are not displayed, and executes accumulating processing (S200), which updates the dictionary database 12 based on the data.

With the above operations, the problem solving support system 35 accepts input words arbitrarily input by the user and efficiently searches for problem solving information which the user intended to obtain.

Figure 11 shows the flow of the example of the detailed operations of Step S200 in Figure 10. The non-corresponding input processing section 126 obtains input words which are judged not to have relevant element words during Step 114 or input words with which the index word character strings that the user intended to obtain are not displayed during Step 128, and collects these input words with an order or frequency appearance (S202). Then, when the number of collected input words during Step 202 reaches a predetermined number, the non-corresponding input processing section 126 asks the user whether the input words corresponding to the user attributes which appear more often than a predetermined frequency can be sent to the server (S204).

In Step 204, when the user inputs permission to send data (S204: Yes) the non-corresponding input processing section 126 sends the collected data corresponding to user attributes to the server (S206). The server receives the data from more than one user for further data collection. By doing this, input words which are not covered by the dictionary database 12 can be displayed in order of high frequency. The system manager who is responsible for updating the dictionary database 12 analyzes which functions the user is attempting to execute in the order of frequency of appearance of input words. In this case, analysis can be done easily by referring to user attributes.

The system manager updates the dictionary database 12 based on the input words whose analysis is completed (S208). For example, the manager registers analyzed input words with the index word database 42 as corresponding element words of index word character strings. When the dictionary database 12 which is updated during Step (208) is installed in the server, the user connects the terminal to the server to download the updated dictionary data. This ends the flow of Step S200.

With Step 200, the system manager of the dictionary database 12 pays attention to input words whose input frequency is greater than a predetermined value among input words which are not covered by the dictionary database 12, and can analyze functions the user intends to obtain while referring to user attributes. By doing this, the dictionary database 12 is appropriately updated according to the history of input words by the user.

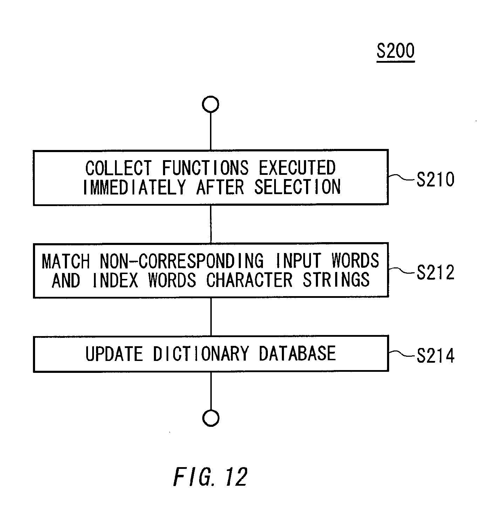

Figure 12 shows the flow of another example of the detailed operations of Step S200 in Figure 10. The non-corresponding input processing section 126 collects input words which are judged not to have corresponding element words during Step 114 and input words with which the index word character strings that the user intended to obtain are judged not to be displayed during Step 128 and matches index word character strings with the functions selected by the user (S210). Then, based on the results of data collection in Step 210, input words corresponding to specific index word character strings with more than a predetermined frequency are matched with element words of the index word character strings (S212). Finally, the correspondence between index word character strings and input words is registered with the index word database (S202). This ends the flow of Step 200.

When index word character strings which the user intended to obtain are not extracted as a result of a search for input words by the problem solving support system 35, it is very likely that the functions to be selected/executed by the user are functions which the user intended to obtain by inputting input words. Therefore, functions which the user intended to obtain by inputting input words can be guessed at by collecting selected and executed functions which correspond to input words. With Step 200, the non-corresponding input processing section 126 appropriately updates the dictionary database 12 based on the input history and operation history of the user.

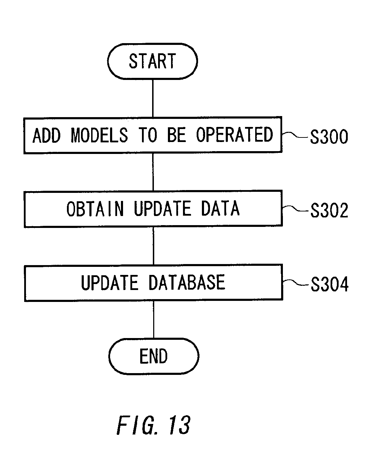

Figure 13 shows an example of how the update control section 204 in the problem solving support system 35 explained in Figure 4 operates. First, the update control section 204 detects that a new electronic apparatus 200, which is to be remotely operated by the execution processing section 40, has been added (S300). In Step 300, detection can be done by sensing that the record medium 202 storing unknown data for the update control section 204 has been inserted into the problem solving support system 35 or by the new electronic apparatus 200, which notifies that a new function has been added to the update control section 204 through wireless communications.

Then the update control section 204 obtains the following as updated data corresponding to index word character strings from the new electronic apparatus 200 or the record medium 202: an execution program for realizing the new functions of the new electronic apparatus 200 which the execution processing section 40 remotely controls; index word character strings which specify the new functions; element words related to the index word character strings; and answer contents corresponding to the index word character strings (S302). The update control section 204 then stores the obtained execution program corresponding to the index word character strings obtained during Step 302 in the execution program group storage files 10, stores the obtained element words in the index word database 42, and stores the obtained answer contents in the answer contents storage section 14 in order to update various databases (5304). This ends the flow. With the above operations, the problem solving support system 35 can offer new problem solving for added functions when new models of the electronic apparatus 200 are added or new functions are added to the electronic apparatus 200.

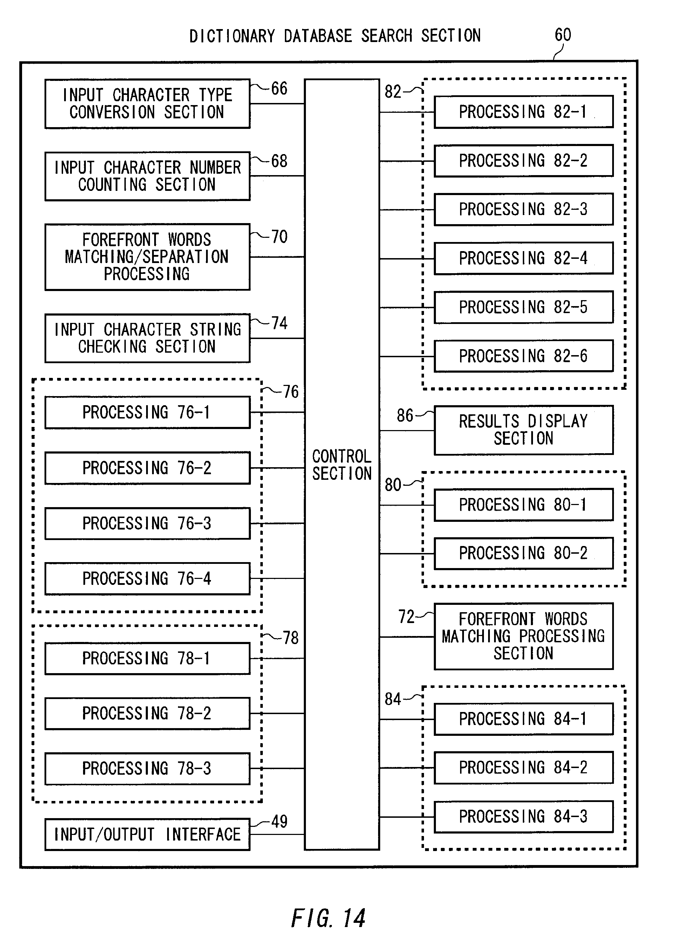

Another example of how the problem solving support system 35 searches for problem solving functions is explained below using the configuration of the dictionary database search section 60 shown in Figure 14. First, a user of a portable telephone 2, an example of the problem solving support system 35, inputs into the input screen what they want to do with key operations or voice messages using their own words. The input data can be text or words. When the user inputs "record talking", for example, into the input screen and presses the search button on the screen, input words are input to the search engine 38 by the arbitrary word input section 58 shown in Figure 5. By doing this, an input character type conversion section 66 of the dictionary database search section 60 converts the input character types. When spaces are continuous, one space is left and the others are deleted. When all the conversion steps are completed, an input character number count section 68 starts the process.

The input character number counting section 68 counts the number n of characters in the input character string. Spaces, punctuation are counted as 1. Then a forefront word matching/separation processing section 70 conducts separation processing of the forefront word matching processing and search processing. The forefront word matching/separation processing section 70 is another example of the input word judgment section 118 of the present invention. With this process, when the input character type is hiragana, katakana, or English/numbers and the number of input characters is n=1, the forefront word matching processing section 72 starts the processing; when the number of input characters is n=1 and the input character type is kanji characters or when the number of input characters is n≥2, an input character string matching section 74 starts the processing.

The input character string matching section 74 matches the input character string with the index word character string 1 of the index word database. When they completely match functions indicating the index word character string 1 are executed or the execution/display select screen which receives a display command for answer contents are displayed. In matching, capital letters are not distinguished for both the input words and the index word character string 1. For example, the input word "bookmark" is recognized as being identical to the "Bookmark" of the index word character string.

When there is more than one completely-matching index word character string 1, all the index word character strings 2 that correspond to the index word character strings 1 are displayed in the ascending order of the index word database. When there are no index word character strings 1 that match completely, a specifying process 76-1 for the matching character strings is conducted by an input character extraction section 76. The specifying process 76-1 for the matching character strings specifies the words that are registered with the collocation dictionary that are searched for matching. The number of characters n1 of the input character strings that are counted by the input character number counting section 68 are matched with n2 within the collocation dictionary 50. Registered words with n2 which satisfy n1≥n2 are searched for matches with the input word.

Then a matching process 76-2 for registered words for matching and the input words is conducted. This process 76-2 is for checking whether or not registered words with n2 that satisfy the conditions of the matching character string specifying process 76-1 of the input character extraction section 76 are included (whether or not the registered words and input character strings match) in the input words according to the procedures below.
(1) All the registered words that have n2 that satisfy the conditions of the process 76-1 are checked with the input words.
(2) The order of the check is the descending order of n2 that satisfies the conditions. When n2=5, for example, all the registered words with 5 for n2 are checked, followed by all the registered words with 4 for n2.
(3) First, registered words that satisfy the conditions of the process 76-2 are checked with the input words from the front (the same number of the registered words) of the input character string. When they do not match the second character and on from the front of the input words are checked. When they still do not match the third character and on from the front of the input words are checked. The process is continued by checking the input words to the right or the left until they match.

For example, when the input word is abcdefg and the registered word is cde:
1. The registered word cde is checked with abc (forefront characters) of the character string. When they do not match:
2. The registered word cde is checked with bcd (second character from the front and on) of the character string. When these do not match:
3. The registered word cde is checked with cde (third character from the front and on) of the character string.
The above check can be done from the end of the input word. More specifically, with operation (3) above registered words that satisfy the conditions of the process 76-1 are checked with the input word from the end (the same number of the registered words) of the input character string. When they do not match, the second character and on from the end of the input character string are checked. When they still do not match, the third character and on from the end of the input word are checked. The process is continued by checking the input word to the right or the left until they match.

Capital letters of the Roman alphabet are recognized as being identical to small letters. The registered word "web", for example, is recognized as being identical to the following eight words.
1. WEB 2. Web 3. WEb 4. WeB 5. web 6. wEb 7. weB 8. wEB
Checking continues up to registered words with n=1, and when there is no matching word the character string "No information. Search with other words." appears on the pop-up screen. When there is a matching character string an input words extraction process 76-3 starts. With the input words extraction process 76-3 character strings that match registered words are extracted from the input words and a half-size space is inserted in place of the extracted character strings. For example, when the input character string is abcdefg and the registered word is cde the original character string is ab_fg and the extracted character string is cde.

Then a checking/extraction repeating process 76-4 starts. With the process 76-4, the input words that remain as a result of input words extraction processing 76-3 are checked and extracted. As with the process of the input characters counting section 68, the number of the input character strings are counted, including spaces. As with the process 76-1, words for checking are specified and as with the process 76-2, the registered words and the input words are checked. Further, as with the process 76-3, the input words are extracted and the extracted words are replaced with the spaces in the original character string. The process 76-4 is continued until there are no words to be extracted. When all the words are extracted, a process 78-1 of a search keyword generation section 78, another example of the element word extract section, 122 starts.

With the process 78-1 of the search keyword generation section 78, extracted words are checked with the merge dictionary. More specifically, all the words extracted in the processes 76-3 and 76-4 are checked one by one with the registered words in the merge dictionary 52. When there is a matching word, it is converted to the element word corresponding to registered words. In matching, whether there is a matching word or not, one word is checked with all the words in the dictionary. Multiple matches are allowed. When there is more than one word to be converted for one extracted word the word is converted to all the element words.

For example, when the extracted word is "see" and is registered with the dictionary as
Element word "retrieve": Synonyms "see"
Element word "display": Synonyms "see",
the extracted word "see" is converted to "retrieve" and "display". When more than one extracted word is converted to the same element word, the element word is determined to be one word. For example, if the extracted words are "homepage" and "internet" and they are registered in the merge dictionary 52 as
Element word "web site": Synonyms "homepage", "internet"
When an input word "internet homepage" is input, the word to be converted is "web site" and the converted word becomes the keyword. Non-matching extracted words become keywords as they are. After conversion, a search keyword number counting process 78-2 starts. With the search keyword number counting process 78-2, the number of search keywords is counted. When there is one search keyword, search keyword matching and a group table process 80 start. When there is more than one search keyword, a process 78-3 starts.

With the process 78-3 whether the word "impossible" is in the search keywords is determined. When there is no "impossible" in the search keywords and there are two search keywords, a process 82-2 conducted by a section 82 for obtaining IDs for words to be displayed and display result screen calculation starts. When the number of search keywords is 4, a process 82-4 starts. When there are five or more search keywords, a process 82-5 starts. When the word "impossible" is in the search keywords, a process 84 conducted by the search key result screen calculation section starts.

The section 82 for obtaining IDs for words to be displayed and for display result screen calculation searches the index word database using the search keyword extracted during the process 78-1 and obtains all the IDs corresponding to element words which match the search keywords. When more than one search keyword is combined with arbitrary keywords and when the number of keywords combined is the same, the order for combining search keywords is not specified, except when the order is the same as the order in a search result display section 86.

For example, when the search keywords are the three words (ABC) and when the search is done by combining two out of the three, any result of either combination (AB, AC, or BC) can be searched first. A process 82-1 is for when there is one search keyword. When there is one extracted search keyword, the element words in the index word database 42 are checked, and all the index word IDs corresponding to element words including the search keywords are obtained. The process 82-2 is for when there are two search keywords.

The process 82-2 is for when there are two search keywords and for checking to determine whether there are index word IDs that include all the search keywords in the element words in the index word database 42. When there are index word IDs that satisfy the conditions, all the IDs are obtained. Then, for the two search keywords, a search is conducted for IDs with either search keyword. When there are index word IDs that satisfy the conditions, all the IDs are obtained. The index word IDs that were previously obtained are not obtained. After obtaining the IDs, a process 82-6 starts.

A process 82-3 is for when there are three extracted search keywords and is for checking to determine whether there are index word IDs that include all the search keywords in the element words in the index word database 42. When there are index word IDs that satisfy the conditions, all the IDs are obtained. Then, for the three search keywords, a search is conducted for IDs with two of the three search keywords. When there are index word IDs that satisfy the conditions, all the IDs are obtained. The index word IDs that were previously obtained are not obtained. Then, for the three search keywords, a search is conducted for IDs with one of the three search keywords. When there are index word IDs that satisfy the conditions, all the IDs are obtained. The index word IDs that were previously obtained are not obtained. After obtaining the IDs, the process 82-6 starts.

The process 82-4 is for when there are four extracted search keywords and is for checking to determine whether there are index word IDs that include all the search keywords in the element words in the index word database 42. When there are index word IDs that satisfy the conditions, all the IDs are obtained. Then, for the four search keywords, a search is conducted for IDs with three of the four search keywords. When there are index word IDs that satisfy the conditions, all the IDs are obtained. The index word IDs that were previously obtained are not obtained. Then, for the four search keywords, a search is conducted for IDs with two of the four search keywords. When there are index word IDs that satisfy the conditions, all the IDs are obtained. The index word IDs that were previously obtained are not obtained. After obtaining the IDs, the process 82-6 starts. Then, for the four search keywords, a search is conducted for IDs with one of the four search keywords. When there are index word IDs that satisfy the conditions, all the IDs are obtained. The index word IDs that were previously obtained are not obtained. After obtaining the IDs, the process 82-6 starts.

The process 82-5 is for when there are five or more extracted search keywords. Combinations of five extracted search keywords are generated and for each combination, the element words of the index word database are checked to determine whether there are index word IDs that simultaneously include all the search keywords. When there are index word IDs that satisfy the conditions, all the IDs are obtained. Then combinations of four extracted search keywords are generated and for each combination the index word database is checked to determine whether there are index word IDs that simultaneously include all the search keywords. When there are index word IDs that satisfy the conditions, all the IDs are obtained. The index word IDs that were previously obtained are not obtained.

With the procedures explained above, a search is conducted for combinations of the three words and then two words. When there are index word IDs that satisfy the conditions, all the IDs are obtained. The index word IDs that were previously obtained are not obtained. After obtaining the IDs the process 82-6 starts.

The search result display section 86, another example of the index word extract section of the present invention, displays the IDs obtained by the section 82 for obtaining IDs for words to be displayed and for display result screen calculation, and screen number data on the search result screen in the following manner:
(1) The search result to be displayed is the index word character string 1, which corresponds to each of the index word IDs in the index word database 42.
(2) The order of the display of index word character strings is from high to low importance in the index word database 42. When the importance is the same, the order is the order in which index word IDs were obtained.
(3) When the same index word character string 1 is in the obtained ID, the index word character string 1 with the smallest ID number is displayed. In this case, when the index word character string 1 is selected, more than one index word character string 2 is displayed.

The search result screen is explained below. The index word character string 1 being displayed is selected by scrolling up or down. The selected index word character string 1 is switched to turn over indication and the "function overview" screen, an example of answer contents, is displayed by pressing the "explanation" key. The "execution/display selection" screen is displayed by pressing the "select" key (soft key 1). At the same time, the index word character string 1 is stored in the navigation history data. The search keyword checking and group table processing section 80, another example of the element word extract section of the present invention, carries out the process when the generated search keyword is 1.

A process 80-1 is for checking a search keyword with the non-matching list. More specifically, a generated search keyword is checked with words in the non-matching list. When they match the message "No information. Search with other words." appears on the pop-up screen, the processing is terminated and the input screen appears. In this case, the words that have already been input are not cleared but memorized. The non-matching list is "impossible", "you", and "them".

When the words do not match, a next process 80-2 starts. The process 80-2 is for checking search keywords with the group table. More specifically, search keywords are checked with the group table 53. When a search keyword matches the registered word on the group table 53, all the function group names corresponding to matching words are displayed in order as temporary index words on the search result display screen. When a specific function group is selected, it is recognized as an input word and the process conducted by the input character number counting section 68 starts. Examples from the group table are as follows:
- Registered words corresponding to the function group name "memo": voice memo, Screen memo, screen memo private information, schedule memo, message memo, telephone book note, free memo
- Registered words corresponding to the function group name "i-mode": Internet connection, basic operation, i-mode password, packet charge check, i-mode setting, web site operation, download

The forefront word matching process section 72 refers to the input word with the index word character string forefront word reading dictionary 54 to obtain all the index word IDs of index word character strings whose first character has the same reading as that of the input word. In this case, capital letters of the Roman alphabet are recognized as being identical to small letters. When there is more than one index word ID, all of them are displayed and the index word character string 1 with the corresponding index word ID in the index word database 42 is displayed. When there is the same index word character string 1 in the obtained ID, only one index word character string 1 is displayed.

For example, when the Roman alphabet "i" is input "Internet connection", "i-mode password", etc., which are the index word character strings 1 of the ID which has "i" of the index word character strings 1 reading dictionary, are displayed. When there is no matching word, "No information. Search with other words." appears on the pop-up screen. When nothing is input on the input screen and the search key is pressed, the message, "Input your question." appears for two seconds before the input screen returns.

When the search keyword includes "impossible", the section 84 for obtaining the index word ID to be displayed and calculating the result screen number calculates the ID and the screen number data with following processes 84-1, 84-2, and 84-3. The process 84-1 is for generating data with [1]. Data with [1] at the end of the word is generated for all search keywords other than "impossible". For example, when the search keywords are "impossible", "receive", and "set", "receive[1]" and "set [1]" are generated as search keywords. In this case, the search keywords are "impossible", "receive", "set", "receive[1]", and "set [1]".

The process 84-2 is for combining search keywords. More specifically, all combinations of search keywords that satisfy the following conditions are generated. The conditions for the combination are as follows:
(1) No combination of keywords that do not include "impossible" is generated.
(2) No combination of keywords other than "impossible" that do not include [1] is generated.
(3) No combination of the same words but with and without [1] is generated.
(4) No combination of six or more keywords including "impossible" is generated.
(5) Single "impossible" is recognized as a search keyword.

For example, when search keywords are "impossible", "receive", and "set", combinations of "receive", "set", "receive [1]", and "set [1]" are not generated. The combination of "impossible" + "receive", "set" is not generated. The combinations of "impossible" + "receive" "receive[1]" + other words (in this case "set" "set[1]") and "impossible" + "set" "set [1]" + other words (in this case "receive" "receive[1]") are not generated. Possible combinations in this case are "impossible" + "receive[1]" "set [1] ", "impossible" + "receive" "set[1]" "impossible" + "receive", "impossible" + "set[1]".

The process 84-3 is for obtaining index word IDs that satisfy the search conditions and calculating the screen number data to be displayed. More specifically, all the combinations of search keywords generated during the process 84-2 are checked if there are index word IDs that simultaneously include all the search keywords in the index word database 42 in element words in the order of most searched words. When there are index word IDs that satisfy the conditions, all the IDs are obtained. The IDs that were previously obtained are not obtained. After the screen number data is calculated the process 82-6 starts.

When search keywords include "impossible", the above processing enables the user to appropriately extract his/her intended search result. When an input word does not include a negative and when an input word is "cancel the schedule", for example, the search result is "schedule cancel". When an input word includes a negative and when an input word is "not to cancel the schedule", for example, the search result is "schedule protect/release". Negative words such as "not" or "don't" etc. are connected with "impossible" by the merge dictionary.

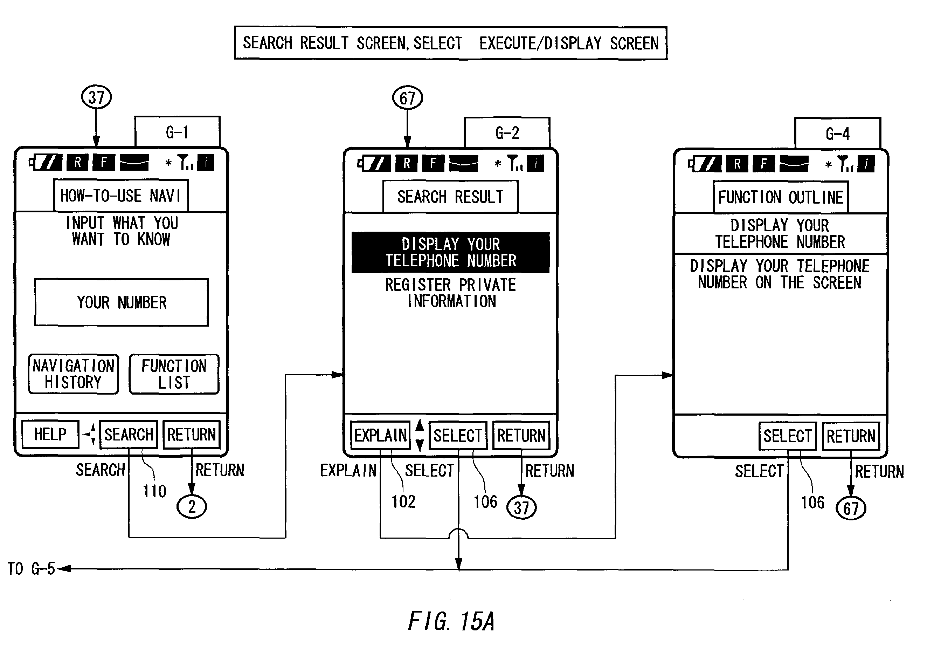

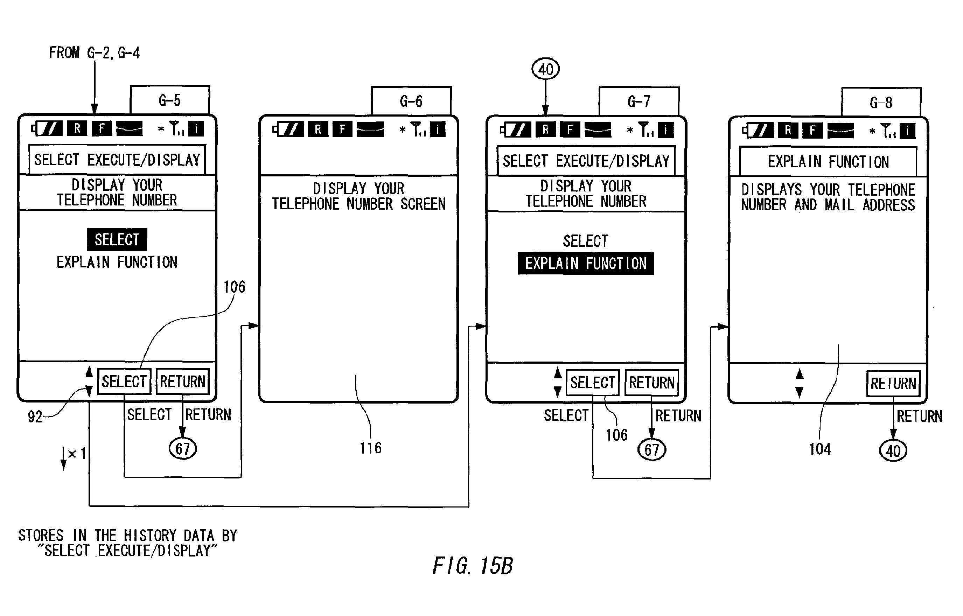

The screen shifting of a portable telephone when the problem solving support system 35 is used in a portable telephone is explained below using Figures 15 to 19. Figure 15 shows an example of the executing functions the user intended to obtain and the displaying of answer contents based on the search result of an input word. When the search button 110 is pressed after an input word is input in the input field for an arbitrary word, a search is executed by following the Steps 100 to 118 (G-1 screen). As a result of the search, "Display my own number" and "Register private information" are displayed (G-2 screen). The index word character strings which are highlighted show that they are presently selected. When "Display my own number" is highlighted and the explain button 102 is pressed, answer contents related to "own number", such as function outline of "Display my own number", are displayed.

When the select button 106 is pressed on the G-2 or G-4 screens, the menus of "Execute" and "Explain functions" for the functions indicated by the selected index word character strings are displayed (G-5 screen). On the G-5 screen, when the "Select" button 106 is pressed while "Execute" is highlighted, the execution processing section 40 executes an execution program stored in the execution program group storage files 10 which correspond to the index word character strings selected on the G-2 screen (G-6 screen). The G-6 screen shows the function execution screen 116. When a cursor 92 is pressed on the G-5 screen, "Explain function" is highlighted (G-7 screen). When the select button 106 is pressed while "Explain function" is highlighted, answer contents related to the index word character string "Display my own number" selected on the G-2 screen, such as "Explain function", are displayed (G-8 screen). Answer contents include "Function outlines", "Explain function", "Operation method", "Restrictions", and "Useful information".

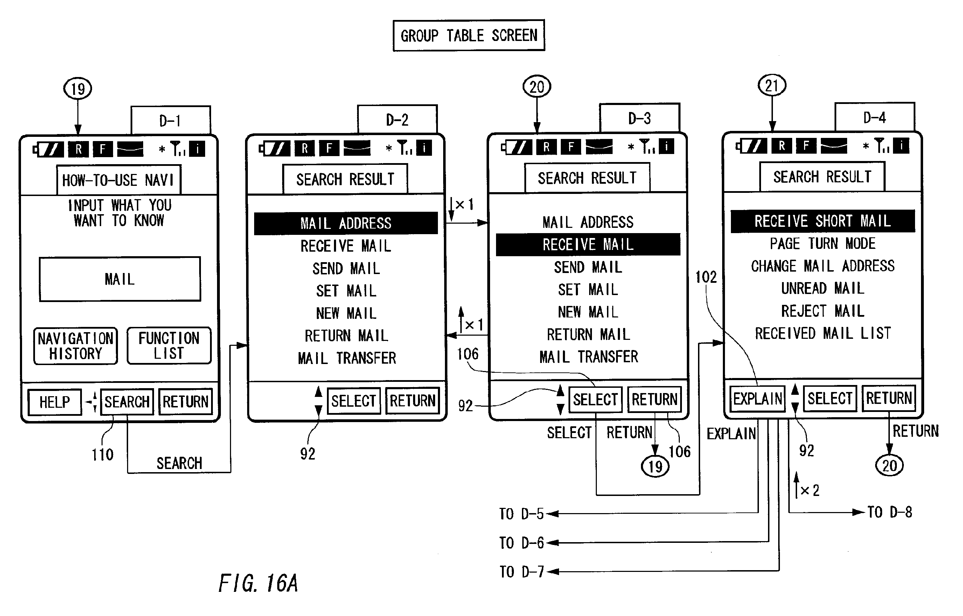

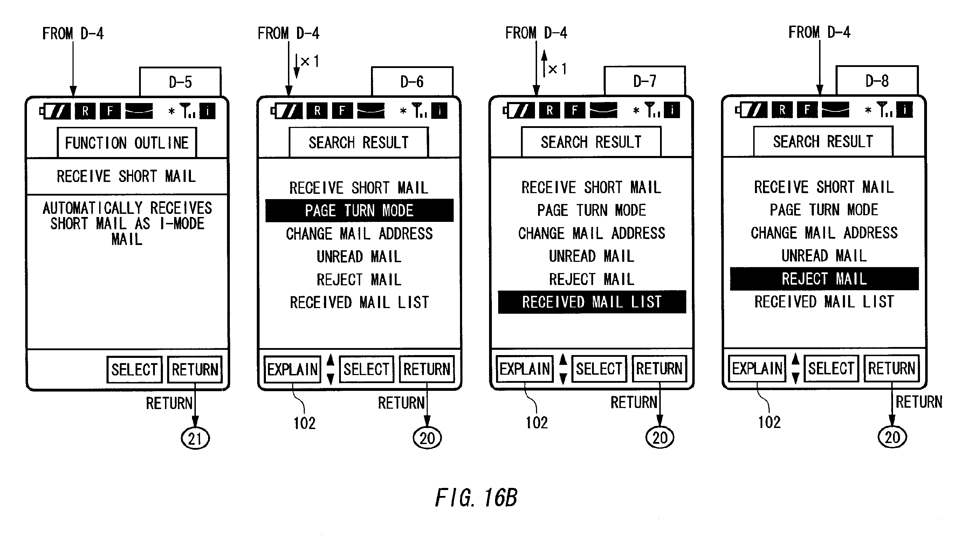

Figure 16 shows a group table. After a search is executed when the number of extracted index word character strings exceeds the limit of the number of character strings to be displayed on one screen, a group table is referred to and function group names which are grouped index word character strings are displayed. In this example, the number of index word character strings extracted for an input word "mail" exceeded the number of character strings to be displayed on one screen, and six index word character strings including, "Receive short mail", "Page tune mode", and "Display received mail", are displayed as the function group name "Received mail" (D-2 and D-3 screens).

When the select button 106 is pressed while a function group name is highlighted (D-3 screen), a list of index word character strings included in the function group is displayed (D-4 screen). With the list of index word character strings displayed selection can be changed by pressing the cursor 92 (D-6, D-7, D-8 screens). When an explain button 102 is pressed while the index word character string "Receive short mail" is highlighted (D-4 screen), function outlines are displayed as an answer content related to "Receive short mail" (D-5 screen).

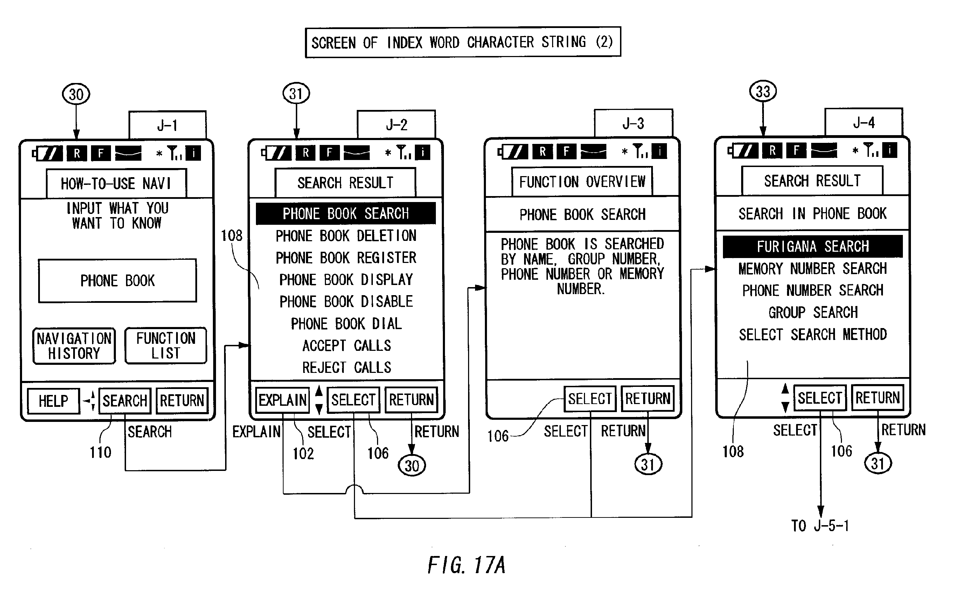

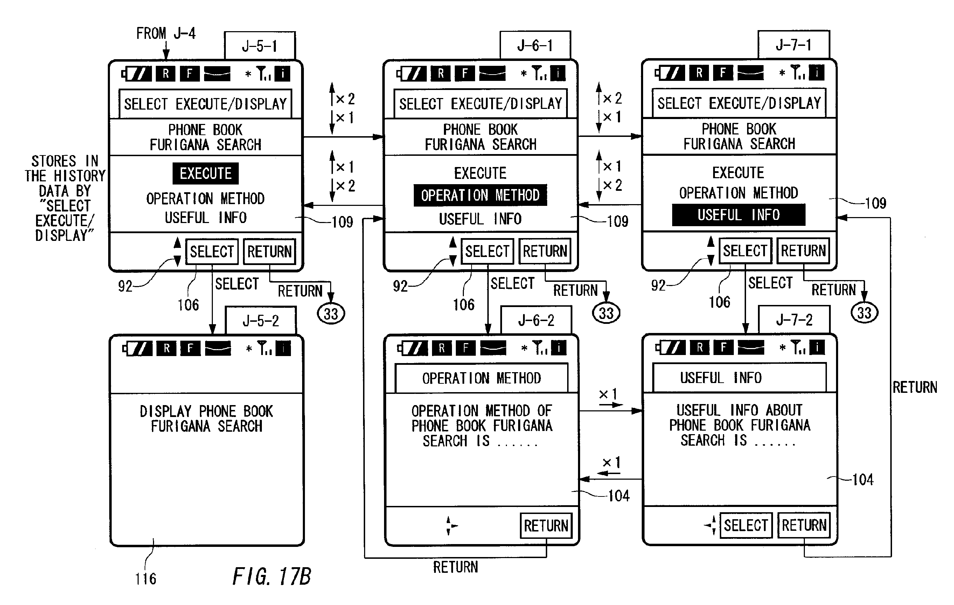

Figure 17 shows the screen display when the index word character string 2 corresponds to the index word character string 1. When there is more than one index word character string hierarchy, for example index word character string 1 and index word character string 2 hierarchies and the index word character string 1 which belongs to the upper hierarchy is selected (J-2 screen, select button 106 pressed), the index word character string 2 which belongs to the lower hierarchy of the index word character string 2 is displayed (J-4 screen). Screen shifts (J-5-1, J-5-2, J-6-1, J-6-2, J-7-1, and J-7-2) after the J-4 screen are not explained as they are the same as in Figure 16.

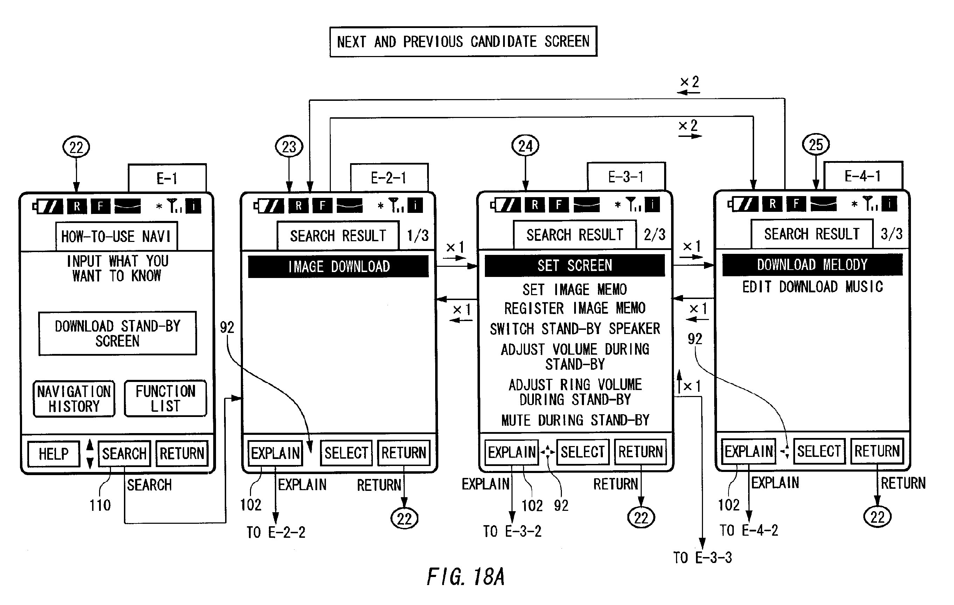

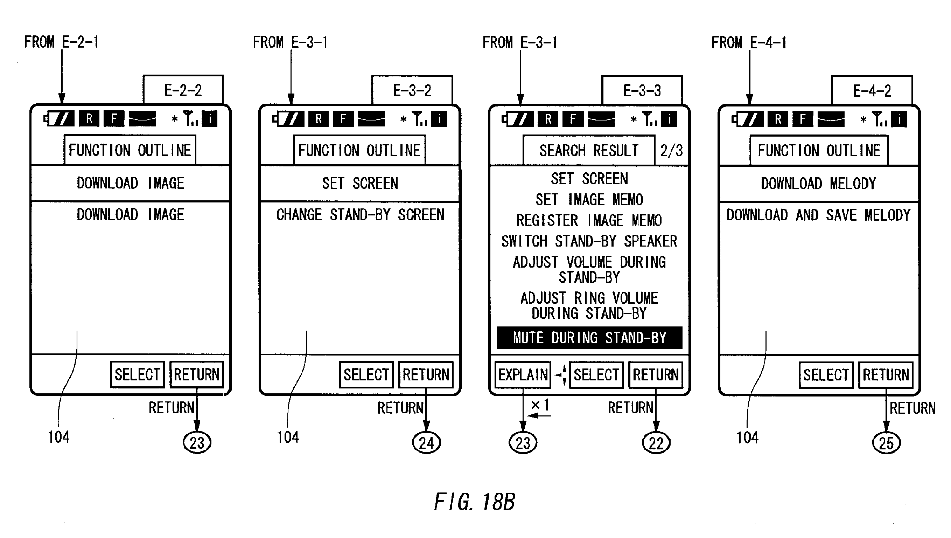

Figure 18 shows the next and the previous candidate screens, which indicate the importance of index word character strings. When there is more than one extracted index word character string, the index word extract section 124 gives priority to display index word character strings of high importance in the index word display section 42. For example, the single index word character string "Download image", which is of the highest importance as a result of a search, is displayed (E-2-1 screen). When the cursor 92 is pressed on the E-2-1 screen, the index word character string of the next highest importance is displayed as the next candidate (E-3-1 screen). When the cursor 92 is pressed, the index word character strings with of the next highest importance is displayed as the following candidate (E-4-1). When the explain key 102 is pressed on the E-2-1, E-3-1, and E-4-1 screens, answer contents related to the index word character strings which have been highlighted when the explain key 102 was pressed are displayed on the screen (104) (E-2-2, E-3-2, and E-4-2 screens).

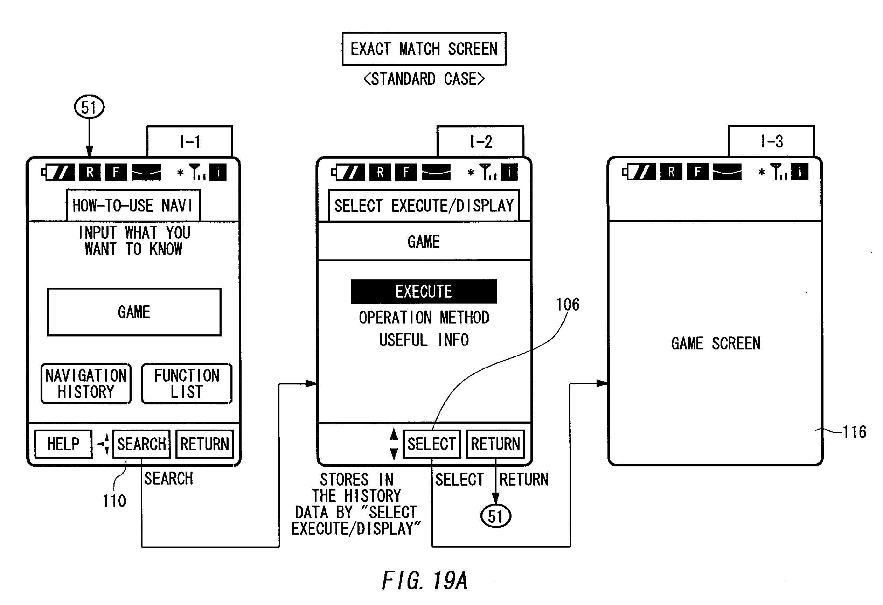

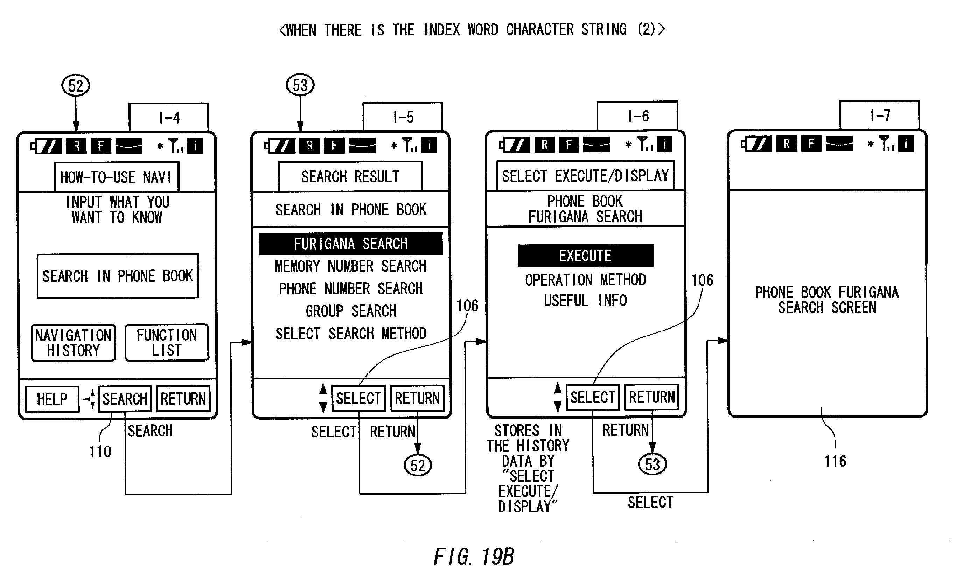

Figure 19 shows the exact match screen. Exact match refers to cases when a character string that exactly matches the index word character string 1 is input in the input section and the screen displayed after a search is called the exact match screen. On the exact match screen, the extracted index word character strings are not displayed and the execution/display select screen can be directly displayed by pressing the "search" key (See 1-2). When the index word character string 2 corresponds to the exactly matching index word character string 1 which has been extracted, the index word character strings 1 are not displayed, but the list of the index word character string 2 is displayed (See 1-5). Other screen shifts are not explained because they are the same as those explained in Figures 16 to 18.

As explained above, the problem solving support system 35 of the present embodiment can provide new problem solving to users even when new functions are added to an electronic apparatus 200 or new models of an electronic apparatus 200 are added. Therefore, the problem solving support system 35 allows both a beginner or an experienced electronic apparatus user to execute a search by accepting input words with the same input field. Given this, the problem solving support system 35 is convenient for a wide range of users.

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

## Claims

1. A problem solving support system for supporting problem solving for electronic apparatus users based on words input by the users on how to use the apparatuses, the system comprising:
execution program group storage files that include an execution program which executes a specified function of the electronic apparatuses for solving the problems by matching index word character strings that specify the function;
a dictionary database which includes element words corresponding to the index word character strings and indicating the concepts of the functions that the index word character strings show and character strings corresponding to the index word character strings and showing the readings of the index word character strings;
an input word judgment section which checks whether an input word is either kana or Roman alphabetic and whether the number of characters of the input word is within a predetermined number;
a forefront word matching processing section which searches said dictionary database based on the input word, extracts the index word character strings that match the input word with the first character of the character string showing the reading of the index word character string and displays the extracted index word character strings when the input word judgment section judges that the input word is either kana or Roman alphabetic and that the number of characters of the input word is within a predetermined number;
a search processing section which searches for the input word using the element word stored in said dictionary database, extracts the index word character strings which correspond to the element word included in the input word based on the search, and displays the extracted index word character strings when the input word judgment section judges that the input word is neither kana nor Roman alphabetic and that the number of characters of the input word is over a predetermined number; and
an execution processing section which executes the execution program which is stored in said execution program group storage files and which corresponds to the index word character strings to be executed when the user inputs an execution command for the index word character string displayed by said forefront word matching processing section or said search processing section.

2. The problem solving support system as claimed in claim 1, wherein said dictionary database comprises:
a merge dictionary which stores synonyms indicating concepts similar to the element word, which concepts corresponding to the element word; and
an index word database including the element word corresponding to the index word character strings and character strings indicating the readings of the index word character strings by corresponding to the index word character strings, and
said search processing section comprises:
an element word extract section which searches for the input word using the element word and synonyms stored in said merge dictionary when said input word judgment section judges that the input word is neither kana nor Roman alphabetic and that the number of characters of the input word is over a predetermined number, said element word extract section extracts, based on a result of the search, the element word included in the input word and the element word corresponding to the synonyms included in the input word which is stored in said merge dictionary; and
an index word extract section which extracts the index word character strings which correspond to the element word from said index word database and displays the extracted index word character strings.

3. The problem solving support system as claimed in claim 1, wherein said input word judgment section accepts an input of the input word with a single input field.

4. The problem solving support system as claimed in claim 1, wherein said input word judgment section makes the judgment according to the input indicating that the input word is to determined.

5. The problem solving support system as claimed in claim 1, wherein the predetermined number is variable.

6. A problem solving support system for supporting problem solving for electronic apparatus users based on words input by the users on how to use the apparatuses, the system comprising:
execution program group storage files that include an execution program which executes the specified function of said electronic apparatuses for solving the problems by matching index word character strings that specify the function;
a dictionary database including element words which describe concepts of the functions which the index word character strings show, corresponding to the index word character strings;
a search processing section which searches for the input word using the element word stored in said dictionary database when the input word is input, and based on the search, extracts the index word character strings which correspond to the element word included in the input word from said dictionary database, and displays the extracted index word character string; and
an execution processing section which executes the execution program which is stored in said execution program group storage files and which corresponds to the index word character string to be executed when the user inputs an execution command for the index word character string displayed by said search processing section, wherein
said search processing section, said execution processing section, and said execution program group storage file are installed in a problem solving support terminal and said dictionary database is removable from the problem solving support terminal.

7. The problem solving support system as claimed in claim 6, wherein said dictionary database comprises:
a merge dictionary which stores synonyms indicating concepts similar to the element word, which concepts corresponding to the element word; and
an index word database including the element word related to the index word character strings, and
said search processing section comprises:
an element word extract section which searches for the input word using the element word and the synonyms when the input word is input, based on the search, and extracts the element word included in the input word and element word corresponding to the synonyms included in the input word which is stored in said merge dictionary; and
an index word extract section which extracts the index word character strings corresponding to the element word extracted by said element word extract section from said index word database and displays the extracted index word character strings.

8. A problem solving support system for supporting problem solving for electronic apparatus users based on words input by the users on how to use the apparatuses, the system comprising:
execution program group storage files that include an execution program which executes a specified function of said electronic apparatuses for solving the problems by matching index word character strings that specify the function;
a dictionary database including element words which indicate concepts of the functions which the index word character strings, corresponding to the index word character strings;
a search processing section which searches for the input word using the element word stored in said dictionary database when the input word is input, and extracts, based on the search, the index word character strings which correspond to the element word included in the input word from said dictionary database, and displays the extracted index word character string; and
an execution processing section which executes the execution program which is stored in said execution program group storage files and which corresponds to the index word character strings to be executed when the user inputs an execution command for the index word character string displayed by said search processing section, wherein
said search processing section, said execution processing section, and said execution program group storage file are installed in a problem solving support terminal and said dictionary database is installed in a server connected to the problem solving support terminal via a network.

9. The problem solving support system as claimed in claim 8, wherein said dictionary database comprises:
a merge dictionary which stores synonyms indicating concepts similar to the element word, which concepts corresponding to the element word; and
an index word database including the element word related to the index word character strings, and
said search processing section comprises:
an element word extract section which searches for the input word using the element word and the synonyms when the input word is input, and extracts, based on the search, the element word included in the input word and element word corresponding to the synonyms included in the input word which is stored in said merge dictionary; and
an index word extract section which extracts the index word character strings corresponding to the element word extracted by said element word extract section from said index word database and displays the extracted index word character strings.

10. The problem solving support system as claimed in claim 6, wherein said dictionary database comprises the element words which are different according to the attributes of the user.

11. The problem solving support system as claimed in claim 6, further comprising a non-corresponding input processing section which collects the input words which have been judged not to include the element words by said search processing section in order of frequency of appearance and outputs the input words appearing more often than a predetermined frequency.

12. The problem solving support system as claimed in claim 11, wherein said non-corresponding input processing section outputs the input words appearing more often than the predetermined frequency corresponding to the attributes of the user and outputs them.

13. The problem solving support system as claimed in claim 11, wherein said non-corresponding input processing section stores index word character strings which specify functions immediately selected by the users corresponding to the input words and registers input words corresponding to the index word character strings more often than a predetermined frequency as element words of the index word character strings in said dictionary database when the input words are judged not to include the element words.

14. A problem solving support system for supporting problem solving for electronic apparatus users based on words input by the users on how to use the apparatuses, the system comprising:
execution program group storage files that include an execution program which executes the specified function of said electronic apparatuses for solving the problems by matching index word character strings that specify the function;
a dictionary database including element words which describe the concepts of the functions which the index word character strings show, the concepts corresponding to the index word character strings;
a search processing section which searches for the input word using the element word stored in said dictionary database when the input word is input, and based on the search, extracts the index word character strings which corresponds to the element word included in the input word from said dictionary database, and displays the extracted index word character string;
an execution processing section which remotely controls the electronic apparatuses through the execution of the execution program which is stored in said execution program group storage files and which corresponds to the index word character string to be executed when the user inputs an execution command; and
an update control section which obtains an execution program for executing the new functions of a new electronic apparatus which is remotely operated by said execution processing section, the index word character strings specifying the new function, and the element word related to the index word character strings, corresponds to the obtained index word character strings, stores the obtained execution program in said execution program group storage file, and stores the obtained element words in said dictionary database.

15. The problem solving support system as claimed in claim 14, wherein said dictionary database comprises:
a merge dictionary which stores synonyms indicating concepts similar to the element word, which concepts corresponding to the element word; and
an index word database including the element word related to said index word character strings, and
said search processing section comprises:
an element word extract section which searches for the input word using the element word and the synonyms when the input word is input, based on the search, and extracts the element word included in the input word and element word corresponding to the synonyms included in the input word which is stored in said merge dictionary; and
an index word extract section which extracts the index word character strings corresponding to the element word extracted by said element word extract section from said index word database and displays the extracted index word character strings.

16. The problem solving support system as claimed in claim 14 wherein at least either the execution program for the new electronic apparatus or the element words correspond to the index word character strings corresponding to the new electronic apparatus, and is stored in a removable record medium.

17. A problem solving support system for supporting problem solving for electronic apparatus users based on words input by the users on how to use the apparatuses, the system comprising:
execution program group storage files that include an execution program which executes the specified function of said electronic apparatuses for solving the problems by matching index word character strings that specify the function;
a dictionary database including element words which includes element words indicating the concept of the functions which the index word character strings show and the importance of the functions specified by the index word character strings;
a search processing section which searches for the input word using the element word stored in said dictionary database, extracts the index word character strings which correspond to said element word included in the input word based on the search, and displays extracted the index word character strings with an order of high importance when the input word is input; and
an execution processing section which executes the execution program which is stored in the execution program group storage files and which corresponds to said index word character string to be executed when the user inputs an execution command for the index word character strings displayed by said search processing section.

18. The problem solving support system as claimed in claim 17, wherein said dictionary database comprises:
a merge dictionary which stores synonyms indicating concepts similar to the element word corresponding to the element word; and
an index word database including said element word related to said index word character strings, and
said search processing section comprises:
an element word extract section which searches for the input word using the element word and synonyms when the input word is input, based on the search, and extracts the element word included in the input word and element word corresponding to the synonyms included in the input word which is stored in said merge dictionary; and
said index word extract section extracts the index word character strings corresponding to the element word, said element word extract section extracts and displays the extracted index word character strings with an order of high importance.

19. A problem solving support method for supporting problem solving for electronic apparatus users based on words input by the users on how to use the apparatuses, the method comprising steps of:
an execution program group control step for controlling an execution program for executing the problem-solving functions which executes the specified function by matching index word character strings that specify the functions of the electronic apparatuses;
a dictionary control step for controlling element words indicating the concepts of the functions which the index word character strings show and character strings showing the readings of said index word character strings;
an input word judgment step for accepting the input of the input word by user and checking whether an input word is either kana or Roman alphabetic and whether the number of characters of the input word is within a predetermined number;
a forefront word matching processing step for referring to said dictionary control step based on the input word to extract the index word character strings that match the input word with the first character of the character string showing the reading of the index word character string when it is judged that the input word is either kana or Roman alphabetic and that the number of characters of the input word is within a predetermined number and for displaying the extracted index word character strings;
a search processing step for searching for the input word using the element word stored in the dictionary database controlled by said dictionary control step, extracts the index word character strings which correspond to the element word included in the input word based on the search, and displays the extracted index word character strings when the input word judgment step judges that the input word is neither kana nor Roman alphabetic and that the number of characters of the input word is over a predetermined number; and
an execution processing step for executing the execution program which corresponds to the index word character strings to be executed and is controlled under said execution program group control step when the user inputs an execution command for the index word character strings displayed by said forefront word matching processing step or said search processing step.

20. A problem solving support method for supporting problem solving for electronic apparatus users based on words input by the users on how to use the apparatuses, the method comprising steps of:
an execution program group control step for controlling an execution program for executing the problem-solving functions which executes the specified function by matching index word character strings that specify the functions of the electronic apparatuses;
a dictionary control step for controlling element words corresponding to the index word character strings and indicating the concepts of the functions which the index word character strings show;
a search processing step for searching for the input word using the element word stored in the dictionary database controlled by said dictionary control step, extracting the index word character strings which correspond to the element word included in the input word based on the search, and displaying the extracted index word character strings when the input word is input;
an execution processing step for remotely controlling the electronic apparatuses by executing the execution program corresponding to the index word character string to be executed in the execution program group control step when the user inputs an execution command for the index word character strings displayed in said search processing step; and
an update control step for obtaining an execution program for executing the new functions of a new electronic apparatus which is remotely operated during said execution processing step, the index word character strings specifying the new function, and the element words related to the index word character strings, by matching the obtained index word character strings, controlling the obtained execution program in said execution program group control step, and controls the obtained element words in said dictionary control step.

21. A problem solving support program for a problem solving support system for supporting problem solving for electronic apparatus users based on words input by the users on how to use the apparatuses, the program causes the problem solving support system to realize:
an execution program group control function that controls an execution program for executing the problem-solving functions by matching index word character strings that specify the functions of the electronic apparatuses;
a dictionary control function which controls element words indicating the concepts of the functions which the index word character strings show and character strings showing the readings of the index word character strings;
an input word judgment function which accepts the input of the input word by user and checks whether an input word is either kana or Roman alphabetic and whether the number of characters of the input word is within a predetermined number;
a forefront word matching processing function which checks the dictionary control function based on the input word, extracts the index word character strings that match the input word with the first character of the character string showing the reading of the index word character string when the input word is judged to be either kana or Roman alphabetic and that the number of characters of the input word is within a predetermined number and displays the extracted index word character strings;
a search processing function which searches for the input word using the element word controlled by the dictionary control function, extracts the index word character strings which correspond to the element word included in the input word based on the search, and displays the extracted index word character strings when the input word judgment function judges that the input word is neither kana nor Roman alphabetic and that the number of characters of the input word is over a predetermined number; and
an execution processing function which executes said execution program which corresponds to the index word character strings to be executed and is controlled by the execution program group control function when the user inputs an execution command for the index word character strings displayed by the forefront word matching processing function or said search processing function.

22. A medium storing a problem solving support program for a problem solving support system for supporting problem solving for electronic apparatus users based on words input by the users on how to use the apparatus, the program causes the problem solving support system to realize:
an execution program group control function that controls an execution program for executing the problem-solving functions by matching index word character strings that specify the functions of the electronic apparatuses;
a dictionary control function which controls element words indicating the concepts of the functions which the index word character strings show;
a search processing function which searches for the input word using the element word controlled by the dictionary control function, extracts the index word character strings which correspond to the element word included in the input word based on the search, and displays the extracted index word character strings when the input word is input;
an execution processing function which remotely controls the electronic apparatus by executing the execution program which corresponds to the index word character strings to be executed and is controlled by the execution program group control function when the user inputs an execution command for the index word character strings displayed by the search processing function; and
an update control function which obtains an execution program for executing the new functions of a new electronic apparatus which is remotely operated by the execution processing function, the index word character strings specifying the new functions, and the element words related to the index word character strings, corresponds to the obtained index word character strings, makes the execution program group control function to control the obtained execution program, and makes the dictionary control function to control the obtained element words.

23. The problem solving support program as claimed in claim 8, wherein said dictionary database comprises the element words which are different according to the attributes of the user.

24. The problem solving support program as claimed in claim 8, further comprising a non-corresponding input processing section which collects the input words which have been judged not to include the element words by said search processing section in order of frequency of appearance and outputs the input words appearing more often than a predetermined frequency.
